(19) Europäisches Patentamt / European Patent Office / Office européen des brevets

(11) **EP 4 131 488 A1**

(12) **EUROPEAN PATENT APPLICATION**
published in accordance with Art. 153(4) EPC

(43) Date of publication:
**08.02.2023 Bulletin 2023/06**

(21) Application number: **21774741.9**

(22) Date of filing: **23.03.2021**

(51) International Patent Classification (IPC):
*H01M 4/36* (1974.07)      *H01M 4/38* (1974.07)
*H01M 4/587* (2010.01)      *C01B 32/05* (2017.01)

(52) Cooperative Patent Classification (CPC):
**C01B 32/05; H01M 4/36; H01M 4/38; H01M 4/587;**
Y02E 60/10

(86) International application number:
**PCT/JP2021/012059**

(87) International publication number:
**WO 2021/193662 (30.09.2021 Gazette 2021/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 23.03.2020  JP 2020050554
           02.10.2020  JP 2020167691

(71) Applicant: **Tosoh Corporation**
**Yamaguchi 746-8501 (JP)**

(72) Inventors:
• **IWASHIMA, Toshiki**
**Ayase-shi, Kanagawa 252-1123 (JP)**

• **ARAKAWA, Taichi**
**Ayase-shi, Kanagawa 252-1123 (JP)**
• **ISHIZUKA, Yuto**
**Ayase-shi, Kanagawa 252-1123 (JP)**
• **ABE, Masanori**
**Ayase-shi, Kanagawa 252-1123 (JP)**
• **MISAKI, Hidehiko**
**Ayase-shi, Kanagawa 252-1123 (JP)**
• **MANIWA, Atsushi**
**Ayase-shi, Kanagawa 252-1123 (JP)**

(74) Representative: **Novagraaf International SA
Chemin de l'Echo 3
1213 Onex, Geneva (CH)**

(54) **COMPOSITE ACTIVE MATERIAL FOR LITHIUM SECONDARY BATTERY, ELECTRODE COMPOSITION FOR LITHIUM SECONDARY BATTERY, LITHIUM SECONDARY BATTERY ELECTRODE, AND METHOD FOR MANUFACTURING COMPOSITE ACTIVE MATERIAL FOR LITHIUM SECONDARY BATTERY**

(57)    A composite active material for a lithium secondary battery includes a matrix having a plurality of voids and a Si-based material accommodated in the voids. The matrix includes amorphous carbon. The Si-based material is Si or a Si alloy.

*Fig.1*

EP 4 131 488 A1

## Description

### Technical Field

The present invention relates to a composite active material for lithium secondary batteries, an electrode composition for lithium secondary batteries, a lithium secondary battery electrode, and a method for manufacturing a composite active material for lithium secondary batteries.

### Background Art

Lithium secondary batteries are widely used for home appliances because of their characteristics such as relatively high energy density, light weight, and long life. With the development of electric vehicles, however, there has been an increasing demand for the development of batteries having a large capacity, high-speed charge-discharge characteristics, good cycle characteristics, and high safety. Such high-power applications require electrodes having a higher specific capacity than electrodes used in known lithium secondary batteries.

Currently, carbon-based materials (e.g., graphite) are mainly used as a negative electrode material in commercially available lithium secondary batteries. However, the charge capacity in the form of graphite is about 372 milliampere-hours per gram (mAh/g). In recent years, silicon has been enthusiastically studied as a high-capacity negative electrode material in place of carbon. The theoretical capacity of silicon is about 4200 mAh/g, which is more than 10 times that of graphite. However, when silicon is used as a negative electrode material, it is necessary to solve problems such as low electron conductivity of silicon, collapse of particles due to a large volume change of silicon caused by charge and discharge, and continuous decomposition of an electrolyte solution.

To overcome these problems, efforts such as combination of an electron conductive material and silicon and introduction of voids for suppressing a volume change have been made. For example, Non Patent Literature 1 reports that combination of silicon and carbon partially achieves improvement in electron conductivity and capacity. Patent Literature 1 reports that high conductivity and suppression of a volume change can be achieved by incorporating a composite active material in a conductive matrix.

### Citation List

### Patent Literature

Patent Literature 1: Japanese Patent No. 6449154

### Non Patent Literature

Non Patent Literature 1: Kong Lijuan et al., Electrochimica Acta, 2016, 198, 144-155.

### Summary of Invention

### Technical Problem

By the way, in recent years, it has been required not only that the capacity is high but also that the volume of a negative electrode material does not expand even after charge and discharge are repeatedly performed. If the volume expansion of the negative electrode material is large, the decomposition of an electrolyte solution cannot be suppressed, which decreases the charge-discharge efficiency and deteriorates the cycle characteristics.

In the technique described in Non Patent Literature 1, however, expansion and shrinkage of silicon are not sufficiently suppressed, and continuous decomposition of an electrolyte solution due to a volume change of silicon cannot be suppressed. Thus, the charge-discharge efficiency is lower than that of graphite. Therefore, there has been room for improvement in terms of suppression of the volume change of a composite active material and cycle characteristics. Even in Patent Literature 1, the volume change of an active material cannot be sufficiently suppressed and the stress due to the volume change cannot be sufficiently relieved. Therefore, continuous decomposition of an electrolyte solution cannot be suppressed, and there has been room for improvement in terms of suppression of the volume change of a composite active material and cycle characteristics.

The present invention has been made in view of the foregoing, and it is an object of the present invention to provide a composite active material for lithium secondary batteries that is capable of manufacturing an electrode material whose volume change at the time of initial charge is suppressed and capable of providing a lithium secondary battery having a high capacity and good cycle characteristics, an electrode composition for lithium secondary batteries, a lithium secondary battery electrode, and a method for manufacturing a composite active material for lithium secondary batteries.

**Solution to Problem**

As a result of thorough studies for achieving the above object, the present inventors have found that the above object can be achieved by the following configuration.

That is, the present invention provides a composite active material for a lithium secondary battery that includes a Si-based material and amorphous carbon. In the composite active material for a lithium secondary battery, the Si-based material is included in the amorphous carbon, and a plurality of structures in which the Si-based material is included in the amorphous carbon are present. The amorphous carbon includes voids that are present around the Si-based material, and the Si-based material is Si or a Si alloy. Specifically, the present invention provides a composite active material for a lithium secondary battery that includes a matrix having a plurality of voids and a Si-based material accommodated in the voids, wherein the matrix includes amorphous carbon, and the Si-based material is Si or a Si alloy.

According to the composite active material for a lithium secondary battery of the present invention, it is possible to manufacture an electrode material whose volume change at the time of initial charge is suppressed, and to achieve a lithium secondary battery having a high capacity and good cycle characteristics.

In the composite active material for a lithium secondary battery, a ratio of a volume of the voids to a volume of the Si-based material is preferably 0.5 to 50.

In the composite active material for a lithium secondary battery, the voids included in the matrix preferably have an average size of 50 to 1000 nm.

In the composite active material for a lithium secondary battery, a standard deviation of a sectional area distribution of the voids included in the matrix is preferably 30 $\mu m^2$ or less.

In the composite active material for a lithium secondary battery, an average number of the Si-based material accommodated in each of the voids included in the matrix is preferably 4 or less.

In the composite active material for a lithium secondary battery, a standard deviation of a sectional area distribution of the Si-based material included in the matrix is preferably 30 $\mu m^2$ or less.

In the composite active material for a lithium secondary battery, a shortest distance between the Si-based material and an inner wall surface of each of the voids accommodating the Si-based material is preferably 10 nm or less.

In the composite active material for a lithium secondary battery, a shortest distance between each of the plurality of voids and voids arranged around a corresponding one of the plurality of voids is preferably 1.0 $\mu m$ or less.

The composite active material for a lithium secondary battery preferably further includes an outer layer outside the matrix, and the outer layer preferably includes crystalline carbon or an amorphous carbon having a pore size of 10 nm or more.

In the composite active material for a lithium secondary battery, the crystalline carbon preferably satisfies at least one of conditions (1) to (3) below:

(1) a purity determined from semiquantitative values of impurities of 26 elements (Al, Ca, Cr, Fe, K, Mg, Mn, Na, Ni, V, Zn, Zr, Ag, As, Ba, Be, Cd, Co, Cu, Mo, Pb, Sb, Se, Th, Tl, and U) by ICP emission spectroscopy is 99 wt% or more,
(2) a S content measured by ion chromatography (IC) using an oxygen flask combustion method is 1 wt% or less, and
(3) a BET specific surface area is 100 $m^2/g$ or less.

The composite active material for a lithium secondary battery preferably has a particle size (D50) of 0.3 to 50 $\mu m$.

The composite active material for a lithium secondary battery preferably has a BET specific surface area of 100 $m^2/g$ or less.

The present invention also provides a method for manufacturing the composite active material for a lithium secondary battery. The method includes a first step of coating the Si-based material with a polymer film to obtain first particles, a second step of mixing or coating the first particles with a precursor of amorphous carbon to obtain second particles, and a third step of aggregating and firing the second particles to form a fired body.

According to the method for manufacturing a composite active material for a lithium secondary battery of the present invention, it is possible to manufacture an electrode material whose volume change at the time of initial charge is suppressed, and to manufacture a composite active material for a lithium secondary battery that can achieve a lithium secondary battery having a high capacity and excellent cycle characteristics.

In the manufacturing method, the polymer film is preferably formed using a monomer, an initiator, and a dispersant.

The manufacturing method preferably further includes a fourth step of coating the fired body with carbon.

In the manufacturing method, the precursor of amorphous carbon is preferably polyacrylonitrile.

The present invention also provides an electrode composition for a lithium secondary battery that includes the composite active material for a lithium secondary battery.

According to the electrode composition for a lithium secondary battery of the present invention, it is possible to manufacture an electrode material whose volume change at the time of initial charge is suppressed, and to manufacture a lithium secondary battery electrode that can achieve a lithium secondary battery having a high capacity and excellent cycle characteristics.

The present invention also provides an electrode including the composite active material for a lithium secondary battery.

According to the electrode of the present invention, a lithium secondary battery whose volume change at the time of initial charge is suppressed and which has a high capacity and excellent cycle characteristics can be achieved.

In the present invention, the term "amorphous carbon" refers to a carbon material in which the half-width of an X-ray diffraction peak of a (002) plane is 3° or more.

The term "crystalline carbon" refers to a carbon material in which the half-width of an X-ray diffraction peak of a (002) plane is less than 3°.

**Advantageous Effects of Invention**

According to the present invention, there are provided a composite active material for lithium secondary batteries that is capable of manufacturing an electrode material whose volume expansion after initial charge is suppressed and capable of achieving a lithium secondary battery having a high capacity and excellent cycle characteristics, an electrode composition for lithium secondary batteries, a lithium secondary battery electrode, and a method for manufacturing a composite active material for lithium secondary batteries.

**Brief Description of Drawings**

Fig. 1 is a schematic sectional view illustrating an example of a composite active material for lithium secondary batteries according to the present invention.

Fig. 2 is a schematic sectional view illustrating an example of a first particle in a method for manufacturing a composite active material for lithium secondary batteries according to the present invention.

Fig. 3 is a schematic sectional view illustrating an example of a second particle in the method for manufacturing a composite active material for lithium secondary batteries according to the present invention.

Fig. 4 is a schematic sectional view illustrating an example of an aggregate of the second particles in Fig. 3.

Fig. 5 is a schematic view illustrating an example of an electrode according to the present invention.

Fig. 6 is a sectional SEM image ($\times$30,000) of a composite active material manufactured in Example 1 of the present invention.

**Description of Embodiments**

<Composite active material for lithium secondary battery>

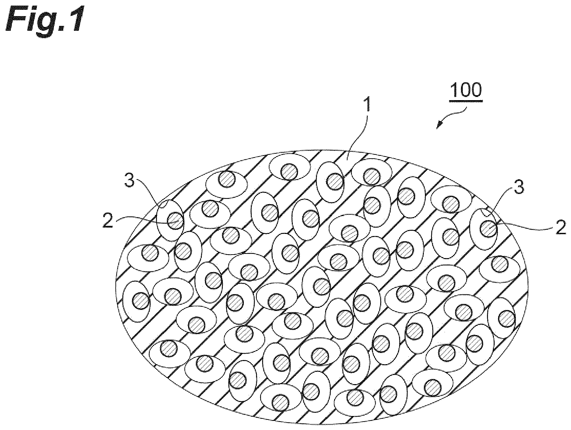

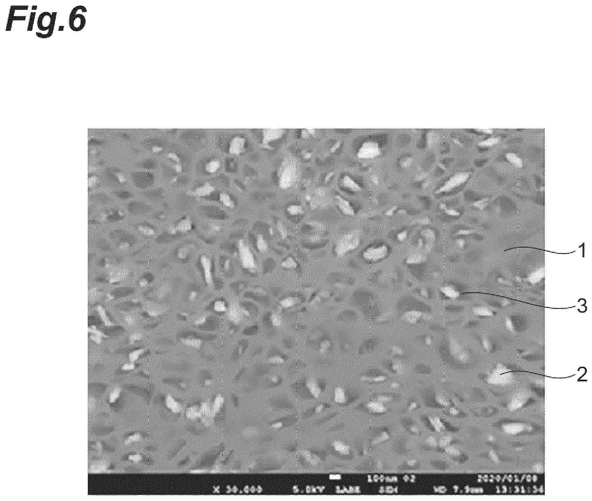

Hereafter, a composite active material (composite material) for lithium secondary batteries according to the present invention will be described in detail by showing an example of the present invention with reference to Fig. 1 and Fig. 6. Fig. 1 is a schematic view illustrating an example of the composite active material for lithium secondary batteries according to the present invention. Fig. 6 is a sectional SEM image ($\times$ 30,000) of a composite active material manufactured in Example 1 of the present invention.

The composite active material for lithium secondary batteries according to the present invention includes a Si-based material and amorphous carbon. The Si-based material is included in the amorphous carbon, and the composite active material for lithium secondary batteries has a plurality of structures in which the Si-based material is included in the amorphous carbon. In the composite active material for lithium secondary batteries according to the present invention, the amorphous carbon includes voids, and the voids are present around the Si-based material.

Specifically, as illustrated in Fig. 1, a composite active material 100 for lithium secondary batteries according to the present invention includes a matrix 1 having a plurality of voids 3 and a Si-based material 2 accommodated in the voids 3, and the matrix 1 includes amorphous carbon. The Si-based material is Si or a Si alloy.

According to the composite active material for lithium secondary batteries of the present invention, it is possible to manufacture an electrode material whose volume change at the time of initial charge is suppressed, and to achieve a lithium secondary battery having a high capacity and excellent cycle characteristics.

As illustrated in Fig. 6, the composite active material for lithium secondary batteries according to the present invention has a structure in which a plurality of voids 3 are included in amorphous carbon, and a Si-based material is included in the voids 3. That is, the plurality of voids 3 are included in the matrix 1, and the Si-based material 2 is accommodated in the voids 3. Therefore, in the case where the composite active material 100 is used for a lithium secondary battery electrode, even if the Si-based material 2 expands at the time of initial charge, the Si-based material 2 can expand within the voids 3. This reduces a stress applied to the inner wall surface of the voids 3 by the Si-based material 2. As a result, the expansion of the matrix 1 is sufficiently suppressed, which suppresses (relieves) the expansion (volume change) of the composite active material 100. Accordingly, the composite active material 100 enables manufacture of an electrode material whose volume change at the time of initial charge is suppressed. Consequently, continuous decomposition of an electrolyte solution is suppressed, and the charge efficiency can be increased. This can achieve a lithium secondary battery having excellent cycle characteristics. The composite active material 100 includes the Si-based material 2. Therefore, a high-capacity lithium secondary battery can also be provided.

According to the composite active material 100, since expansion or shrinkage (volume change) is relieved, the occurrence of leakage of an electrolyte solution and a decrease in the life of the battery can also be suppressed.

In addition, the composite active material 100 includes a plurality of voids 3 in the matrix 1 and accommodates the Si-based material 2 in the voids 3. Accordingly, the composite active material 100 has the following advantages as compared with an aggregate of core-shell particles in which a Si-based material serving as a core is accommodated in voids present in amorphous carbon serving as a shell. That is, conduction paths of electrons and lithium ions are sufficiently ensured by the matrix 1, which reduces the resistance to transfer of electrons and lithium ions. This suppresses a decrease in rate characteristics and a decrease in capacity retention due to charge and discharge.

Accordingly, the composite active material for lithium secondary batteries according to the present invention is useful as a composite active material for an electrode material (in particular, a negative electrode material) used in a lithium secondary battery.

The matrix 1 contains amorphous carbon. The content of the amorphous carbon in the matrix 1 is preferably 20 mass% or more, more preferably 40 mass% or more, and particularly preferably 100 mass%. When the content of the amorphous carbon in the matrix 1 is 20 mass% or more, the denseness of the matrix is improved, and the infiltration of the electrolyte solution into the composite active material can be suppressed. This improves the cycle characteristics.

The voids in the composite active material for lithium secondary batteries according to the present invention are introduced to relieve an expansion stress of the Si-based material. Therefore, the ratio of the volume of the voids to the volume of the Si-based material is preferably 0.5 to 50, more preferably 1 to 30, even more preferably 2 to 10, still more preferably 3 to 10, and particularly preferably 3 to 7. When the volume ratio is within this range, the expansion of the composite active material is relieved, and the volume capacity of the composite active material is less likely to decrease.

The following method for calculating the ratio of the volume of the voids to the volume of the Si-based material is exemplified.

First, a negative electrode for lithium secondary batteries is cut in a vertical direction (thickness direction) of the electrode using a section processing device. Alternatively, a composite active material is cut. The device used for section processing is preferably a cross-section polisher in order to obtain a clearer image. Then, the obtained sectional portion is observed using a microscope. The microscope used herein is preferably a field emission scanning electron microscope (FE-SEM) because it is necessary to obtain a sufficient resolution and a sufficient observation area. The obtained microscope image is hereinafter referred to as a "sectional SEM image". Subsequently, two transparent sheets are placed on the obtained printed image of the secondary electron image. Portions corresponding to the Si-based material are painted with a pen on one of the sheets, and portions corresponding to the voids are painted with a pen on the other of the sheets. The transparent sheets are preferably OHP sheets (sheets for an overhead projector) because of their good workability. Then, each of the images is converted into JPEG or TIFF image data and binarized using a NanoHunter NS2K-Pro (Nanosystem Corporation) to calculate an area S 1 of the portions corresponding to the Si-based material and an area S2 of the portions corresponding to the voids. Thereafter, the thus-calculated areas S 1 and S2 are converted into a volume V1 of the portions corresponding to the Si-based material and a volume V2 of the portions corresponding to the voids. Here, assuming that the portions corresponding to the Si-based material and the portions corresponding to the voids are circles, the radius r of the circle is calculated from formula (A) below. The volume V is calculated from formula (B) below using the calculated radius r. Thus, the ratio of the volume of the voids to the volume of the Si-based material can be calculated.

$$r = (area/\pi)^{1/2} \cdots (A)$$

$$V = 4\pi r^3/3 \cdots (B)$$

In the composite active material for lithium secondary batteries according to the present invention, the average size of the voids included in the amorphous carbon is preferably 50 to 1000 nm and more preferably 100 to 600 nm from the viewpoint of expansion relief and electronic conduction.

The following method for calculating the average size of voids is exemplified.

For the sectional SEM image of the composite active material obtained by the above-described method, a plurality of voids are selected, the lengths of the major axis and the minor axis of the voids are measured, and the average of the lengths is calculated. This average is defined as a void size. The number of voids selected is preferably as large as possible. From the viewpoint of workability, 10 or more voids, preferably 20 or more voids, are measured. The average size of the voids can be calculated by averaging the measured void sizes.

In the composite active material for lithium secondary batteries according to the present invention, the standard deviation of the sectional area distribution of the voids included in the matrix is preferably 30 $\mu m^2$ or less and more preferably 15 $\mu m^2$ or less. When the standard deviation is within this range, the voids are uniformly dispersed in the composite active material, the expansion stress is relieved, and the electron conductivity is less likely to decrease.

The following method for calculating the standard deviation of the sectional area distribution of the voids in the matrix is exemplified.

One transparent sheet is placed on the printed image of the sectional SEM image of the composite active material obtained by the above-described method. Portions corresponding to the voids are painted with a pen. The transparent sheet is preferably an OHP sheet because of its good workability. The painted image is then converted into JPEG or TIFF image data and binarized using a NanoHunter NS2K-Pro (Nanosystem Corporation). The image is divided into meshes, and the area of portions corresponding to the voids in each mesh is calculated. The standard deviation of the sectional area distribution of the voids in the composite active material can be calculated by calculating the standard deviation of the obtained area of the portions corresponding to the voids in each mesh. The number of divided meshes can be optionally selected, but is preferably 10 to 1000 and more preferably 50 to 400.

The half-width of an X-ray diffraction peak of a (002) plane of the amorphous carbon in the present invention is preferably 15° or less and more preferably 3° to 12°. When the half-width of the X-ray diffraction peak of the (002) plane of the amorphous carbon is 15° or less, the initial charge-discharge efficiency is improved.

In the composite active material for lithium secondary batteries according to the present invention, the average number of the Si-based material accommodated in one void contained in the amorphous carbon is preferably 4 or less and more preferably 2 or less. When the average number is 4 or less, the electron conductivity is further ensured and the expansion of the Si-based material is efficiently relieved.

The following method for calculating the average number of the Si-based material accommodated in one void contained in the amorphous carbon is exemplified.

For the sectional SEM image of the composite active material obtained by the above-described method, a plurality of voids including the Si-based material are selected. The total number of the Si-based material included in the voids is measured. The number of voids selected is preferably as large as possible. From the viewpoint of workability, the number of voids is 10 or more and preferably 20 or more. By dividing the measured total number of the Si-based material by the number of voids measured to calculate an average, the average number of the Si-based material accommodated in one void in the amorphous carbon can be calculated.

In the composite active material for lithium secondary batteries according to the present invention, the standard deviation of the sectional area distribution of the Si-based material included in the amorphous carbon is preferably 30 $\mu m^2$ or less and more preferably 15 $\mu m^2$ or less. When the standard deviation is within this range, the Si-based material is uniformly dispersed in the composite active material, and the electron conductivity and the capacity are less likely to decrease.

The following method for calculating the standard deviation of the sectional area distribution of the Si-based material included in the amorphous carbon is exemplified.

One transparent sheet is placed on the printed image of the sectional SEM image of the composite active material obtained by the above-described method, and portions corresponding to the Si-based material are painted with a pen. The transparent sheet is preferably an OHP sheet because of its good workability. The painted image is then converted into JPEG or TIFF image data and binarized using a NanoHunter NS2K-Pro (Nanosystem Corporation). The image is divided into meshes, and the area of portions corresponding to the Si-based material in each mesh is calculated. The standard deviation of the sectional area distribution of the Si-based material in the composite active material can be calculated by calculating the standard deviation of the obtained area of the portions corresponding to the Si-based material in each mesh. The number of divided meshes can be optionally selected, and is preferably 10 to 1000 and more preferably 50 to 400.

The shortest distance between the Si-based material in the composite active material for lithium secondary batteries according to the present invention and the inner wall surface of each of the voids accommodating the Si-based material is preferably 10 nm or less. When the shortest distance is 10 nm or less, the electron conductivity and the lithium ion conductivity are further improved. The method for calculating the shortest distance between the Si-based material in the composite active material and the inner wall surface of each of the voids accommodating the Si-based material is, for example, a method for measuring a distance on a sectional SEM image. The shortest length is more preferably 10 nm or less and further preferably 5 nm or less. The shortest distance is particularly preferably 0 nm. That is, the Si-based material is preferably in contact with the inner wall surface of each of the voids. In this case, when the Si-based material expands during charging, the stress applied to the inner wall surface of each of the voids by the Si-based material is more effectively reduced.

In the composite active material for lithium secondary batteries according to the present invention, the shortest distance between each of the plurality of voids and voids arranged around a corresponding one of the plurality of voids is preferably 1.0 $\mu$m or less, more preferably 0.7 $\mu$m or less, and further preferably 0.5 $\mu$m or less. In this case, the contact between the Si-based material and the electrolyte solution is further suppressed, which further improves the life of the battery. When the shortest distance is 1.0 $\mu$m or less, the electron transfer effect provided by the matrix 1 is enhanced. The matrix 1 preferably has a mesh-like shape in a sectional view in terms of electron transfer.

The particle size (D50: 50% volume-based particle size) of the composite active material for lithium secondary batteries according to the present invention is preferably 0.3 to 50 $\mu$m and more preferably 0.3 to 40 $\mu$m. When the particle size (D50) of the composite active material for lithium secondary batteries is 0.3 to 50 $\mu$m, the smoothness of the electrode surface and the density of the composite active material in the electrode can be improved. That is, when the particle size is 0.3 $\mu$m or more, aggregates formed of a plurality of the composite active materials are not easily formed upon coating of an electrode-forming composition containing the composite active material for lithium secondary batteries. This improves the coating properties of the electrode-forming composition, thereby further improving the smoothness of the electrode surface. When the particle size is 50 $\mu$m or less, the filling property of the composite active material in the electrode is further improved, thereby further improving the density of the composite active material in the electrode.

The particle size (D90: 90% volume-based particle size) is preferably 1 to 75 $\mu$m and more preferably 2 to 60 $\mu$m. When the particle size (D90) of the composite active material for lithium secondary batteries is 1 to 75 $\mu$m, the smoothness of the electrode surface and the density of the composite active material in the electrode can be improved. That is, when the particle size is 1 $\mu$m or more, aggregates formed of a plurality of the composite active materials are not easily formed upon coating of an electrode-forming composition containing the composite active material for lithium secondary batteries. This improves the coating properties of the electrode-forming composition, thereby further improving the smoothness of the electrode surface. When the particle size is 75 $\mu$m or less, the filling property of the composite active material in the electrode is further improved, thereby further improving the density of the composite active material in the electrode.

D50 and D90 correspond to particle sizes at cumulative 50% and cumulative 90%, respectively, in the cumulative particle size distribution measured by a laser diffraction scattering method.

In the measurement of the particle size (D50 or D90), the composite active material for lithium secondary batteries is added to a liquid and vigorously mixed using ultrasonic waves or the like, and the prepared dispersion liquid is introduced as a sample into an apparatus (laser particle size analyzer). When the composite active material is not well compatible with the liquid, for example, a surfactant may be optionally added. The liquid is preferably water, an alcohol, or a low-volatile organic solvent from the viewpoint of workability.

The composite active material for lithium secondary batteries according to the present invention preferably has a BET specific surface area of 100 m$^2$/g or less, more preferably 0.5 to 70 m$^2$/g, and particularly preferably 0.5 to 30 m$^2$/g. When the BET specific surface area is 100 m$^2$/g or less, formation of a solid electrolyte interphase (SEI) on the surface of the active material due to contact with an electrolyte solution and charge and discharge is suppressed while voids are introduced into the composite active material. Thus, the initial charge-discharge efficiency and the capacity retention can be improved.

The BET specific surface area is a value measured by a BET method based on nitrogen adsorption (JIS Z 8830, one-point method).

Si referred to in the present invention is not particularly limited as long as it has a purity equal to or higher than that of general-purpose grade silicon metal. Specific examples of such silicon include general-purpose grade silicon metals with a purity of about 98 wt%, chemical grade silicon metals with purities of 2N to 4N, polysilicons with a purity higher than that of 4N obtained by chlorination and distillation, ultrahigh-purity single-crystal silicons obtained through a deposition process by a single-crystal growth method, p-type or n-type silicons obtained by doping the foregoing silicons with a group 13 or 15 element in the periodic table, chips generated by polishing or slicing wafers in a semiconductor manufacturing process, and waste wafers rejected in the process.

The Si alloy referred to in the present invention is an alloy containing Si as a main component. In the Si alloy, the element other than Si is preferably one or more of group 2 to 15 elements in the periodic table, and is preferably an element in which the phase contained in the alloy has a melting point of 900°C or higher. Among the group 2 to 15 elements in the periodic table, group 2 to 4, 7, 8, and 11 to 14 elements are preferable.

In the composite active material for lithium secondary batteries according to the present invention, the particle size (D50) of the Si-based material is preferably 0.01 to 5 μm, more preferably 0.01 to 1 μm, and particularly preferably 0.05 to 0.6 μm. When D50 is 0.01 μm or more, decreases in capacity and initial efficiency caused by surface oxidation are suppressed. When D50 is 5 μm or less, cracking due to expansion caused by lithium insertion is less likely to occur, which further suppresses occurrence of cycle deterioration. The particle size (D50) is a volume-average particle size measured with a laser particle size analyzer.

The content of the Si-based material is preferably 5 to 80 parts by mass and particularly preferably 15 to 50 parts by mass relative to 100 parts by mass in total of the Si-based material and the amorphous carbon. When the content of the Si-based material is 5 parts by mass or more relative to 100 parts by mass in total of the Si-based material and the amorphous carbon, a sufficiently large capacity is obtained. When the content of the Si-based material is 80 parts by mass or less relative to 100 parts by mass in total of the Si-based material and the amorphous carbon, cycle deterioration is less likely to occur.

The amorphous carbon according to the present invention is not particularly limited as long as the amorphous carbon has non-crystallinity. The amorphous carbon is preferably a non-crystalline or microcrystalline carbonaceous material other than graphite.

The non-crystalline or microcrystalline carbonaceous material other than graphite is obtained by firing a precursor of amorphous carbon. Examples of the precursor of amorphous carbon include polyaniline, polypyrrole, polyacrylonitrile, polyvinyl alcohol, polyglycerin, poly(p-phenylene vinylene), polyimide resin, resorcinol-formaldehyde resin, phenolic resin, epoxy resin, melamine resin, urea resin, cyanate resin, furan resin, ketone resin, unsaturated polyester resin, urethane resin, acrylonitrile-styrene (AS) resin, acrylonitrile-butadiene-styrene (ABS) resin, pyrrole, dopamine, ammonium alginate, saccharides such as cellulose, glucose, saccharin, and fructose, coal pitch (e.g., coal tar pitch), petroleum pitch, mesophase pitch, coke, low-molecular-weight heavy oil, and derivatives thereof. Among them, polyaniline, polypyrrole, polyacrylonitrile, polyvinyl alcohol, polyimide resin, resorcinol-formaldehyde resin, phenolic resin, dopamine, saccharides such as glucose, saccharin, and fructose, coal pitch (e.g., coal tar pitch), petroleum pitch, and derivatives thereof are preferred. In particular, polyaniline, polyacrylonitrile, polyvinyl alcohol, phenolic resin, coal pitch (e.g., coal tar pitch), and derivatives thereof are preferred.

The temperature (firing temperature) at which the precursor of the amorphous carbon is fired may be any temperature as long as the precursor is carbonized. The firing temperature is preferably 300 to 1500°C, particularly preferably 500 to 1300°C, and more preferably 600 to 1100°C. When the firing temperature is 300°C or higher, the carbonization readily proceeds. On the other hand, when the firing temperature is 1500°C or lower, a reaction between the Si-based material and an inert gas described below is less likely to occur, which tends to suppress a decrease in discharge capacity.

The firing is preferably performed in an inert gas atmosphere. Examples of the inert gas used include nitrogen, argon, and helium. Among them, nitrogen is preferred.

In the composite active material for lithium secondary batteries according to the present invention, the content of the amorphous carbon is preferably 20 to 95 parts by mass and particularly preferably 30 to 85 parts by mass relative to 100 parts by mass in total of the Si-based material and the amorphous carbon. When the content of the amorphous carbon is 20 parts by mass or more relative to 100 parts by mass in total of the Si-based material and the amorphous carbon, the amorphous carbon can cover the Si-based material. This provides a sufficient conductive path, and capacity deterioration is less likely to occur. When the content of the amorphous carbon is 95 parts by mass or less relative to 100 parts by mass in total of the Si-based material and the amorphous carbon, a sufficient capacity is easily obtained.

The composite active material for lithium secondary batteries according to the present invention may further include an outer layer outside the matrix 1, and the outer layer may contain crystalline carbon or an amorphous carbon having a pore size of 10 nm or more. The presence of the crystalline carbon in the outer layer improves the adhesion between particles of the composite active material when an electrode is manufactured by press molding, and improves the smoothness of the surface of the composite active material. This further improves the density of the electrode. When the composite active material further has an outer layer containing amorphous carbon outside the matrix 1, the pore size of the amorphous carbon is preferably 10 nm or more and 1000 nm or less, more preferably 10 nm or more and 500 nm or less, and particularly preferably 10 nm or more and 200 nm or less. When the pore size is within this range, the compatibility of the composite active material with an electrolyte solution is improved. This improves the charge capacity and the rate characteristics of the lithium secondary battery. Specifically, when the pore size of the amorphous carbon is 10 nm or more, the compatibility of the composite active material with an electrolyte solution is improved. When the pore size is 1000 nm or less, the density of the electrode does not readily decrease. As a result, the reaction between Si and the electrolyte solution does not readily occur in the lithium secondary battery, which suppresses a decrease in capacity retention.

The pore size in the outer layer can be measured by a BJH method. The measuring apparatus used may be a surface area and porosimetry analyzer Tristar 3000 manufactured by Shimadzu Corporation.

The amorphous carbon may be the same as or different from the amorphous carbon included in the matrix 1. When the amorphous carbon included in the outer layer is different from the amorphous carbon included in the matrix 1, the charge-discharge efficiency can be further improved.

The crystalline carbon according to the present invention is not particularly limited as long as the crystalline carbon has crystallinity, and is preferably carbon derived from graphite.

The carbon derived from graphite is obtained by firing graphite. Examples of the graphite include natural graphite and artificial graphite. Among them, flaked graphite obtained by flaking natural graphite, which is usually called graphite, is preferred.

In this specification, flaked graphite refers to a graphite in which the number of graphene sheets stacked is 400 or less. The graphene sheets are bonded to each other mainly by van der Waals force.

The number of layers of graphene sheets in the flaked graphite is preferably 300 or less, more preferably 200 or less, and further preferably 150 or less from the viewpoint that a battery active material capable of combining with lithium ions and the flaked graphite are more uniformly dispersed, and expansion of a battery material using the composite active material for lithium secondary batteries is further suppressed and/or from the viewpoint that the cycle characteristics of the lithium secondary battery are further improved. The number of layers of graphene sheets is preferably 5 or more from the viewpoint of ease of handling.

The number of layers of graphene sheets in the flaked graphite can be measured using a transmission electron microscope (TEM).

The average thickness of the flaked graphite is preferably 40 nm or less and more preferably 22 nm or less from the viewpoint of further improving the rate characteristics of the lithium secondary battery. The average thickness of the flaked graphite is preferably 4 nm or more because the manufacturing procedure is simplified.

The average thickness is measured by a method in which the flaked graphite is observed with a TEM, the thicknesses of layers of stacked graphene sheets in 10 or more flaked graphite are measured, and the measured thicknesses are arithmetically averaged.

The flaked graphite is obtained by exfoliating and flaking a graphite compound between its layer surfaces.

An example of the flaked graphite is so-called expanded graphite.

Graphite is contained in the expanded graphite. The expanded graphite is obtained by, for example, treating scale-like graphite with concentrated sulfuric acid, nitric acid, a hydrogen peroxide solution, or the like, intercalating the chemical solution into gaps between graphene sheets, and performing heating to expand the gaps between the graphene sheets when the intercalated chemical solution is vaporized. As described later, a predetermined composite active material for lithium secondary batteries can be manufactured by using expanded graphite as a starting material. That is, expanded graphite can also be used as graphite in the composite active material for lithium secondary batteries.

An example of the graphite is also expanded graphite subjected to spheroidizing treatment. The procedure of the spheroidizing treatment will be described in detail later. As described later, when the spheroidizing treatment is performed on the expanded graphite, the spheroidizing treatment may be performed together with other components (e.g., precursors of hard carbon and soft carbon and a battery active material capable of combining with lithium ions).

The crystalline carbon or graphite preferably satisfies at least one of the following conditions (1) to (3).

(1) The purity is 99 wt% or more or the impurity amount is 10000 ppm or less.
(2) The S content is 1 wt% or less.
(3) The BET specific surface area is 100 $m^2/g$ or less.

When the purity is 99 wt% or more or the impurity amount is 10000 ppm or less, the irreversible capacity due to formation of SEI derived from impurities decreases. Therefore, a decrease in the initial charge-discharge efficiency, which is a ratio of initial discharge capacity to initial charge capacity, tends to be suppressed.

When the S content is 1 wt% or less, the irreversible capacity decreases as in the condition (1). This suppresses a decrease in the initial charge-discharge efficiency. The S content is more preferably 0.5 wt% or less.

The BET specific surface area of the crystalline carbon or graphite is more preferably 5 to 100 $m^2/g$ and particularly preferably 20 to 50 $m^2/g$. When the BET specific surface area of the crystalline carbon or graphite is 100 $m^2/g$ or less, an area in which the reaction between the crystalline carbon or graphite and the electrolyte solution occurs can be decreased, which suppresses a decrease in initial charge-discharge efficiency.

The specific surface area of the crystalline carbon or graphite is measured by a BET method based on nitrogen adsorption (JIS Z 8830, one-point method).

The impurity amount is measured by ICP emission spectroscopy from semiquantitative values of impurities of the following 26 elements (Al, Ca, Cr, Fe, K, Mg, Mn, Na, Ni, V, Zn, Zr, Ag, As, Ba, Be, Cd, Co, Cu, Mo, Pb, Sb, Se, Th, Tl, and U). The S content is measured by ion chromatography (IC) after graphite is subjected to a combustion/absorption process by an oxygen flask combustion method and then filtrated with a filter.

<Method for manufacturing composite active material for lithium secondary battery>

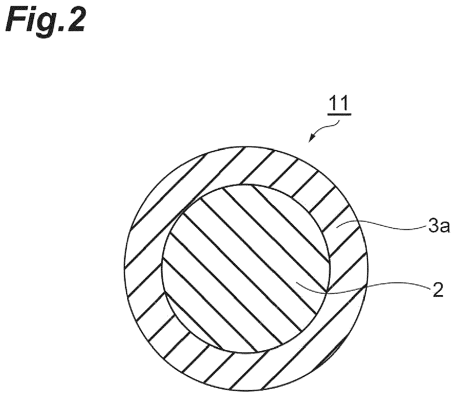

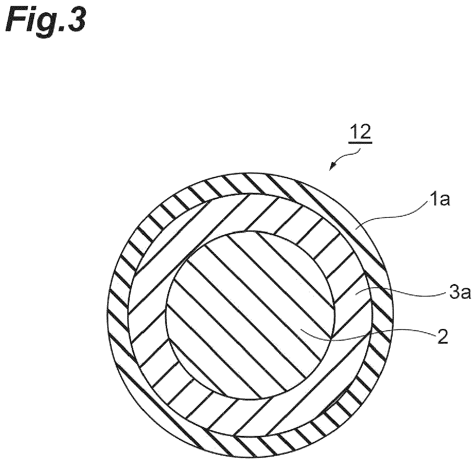

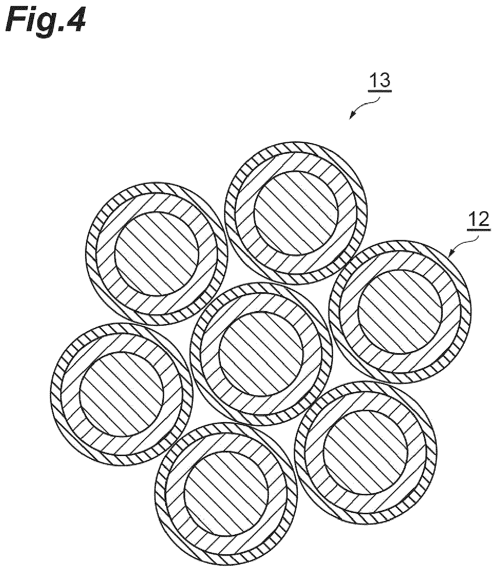

Next, a method for manufacturing a composite active material for lithium secondary batteries according to the present invention will be described with reference to Figs. 2 to 4. Fig. 2 is a schematic sectional view illustrating an example of a first particle in the method for manufacturing a composite active material for lithium secondary batteries according to the present invention. Fig. 3 is a schematic sectional view illustrating an example of a second particle in the method for manufacturing a composite active material for lithium secondary batteries according to the present invention. Fig. 4 is a schematic sectional view illustrating an example of an aggregate of the second particles in Fig. 3.

As illustrated in Figs. 2 to 4, the method for manufacturing a composite active material for lithium secondary batteries according to the present invention is a method for manufacturing the above-described composite active material for lithium secondary batteries. The method includes a first step of coating a Si-based material 2 with a polymer film 3a to obtain first particles 11, a second step of mixing or coating the first particles 11 with a precursor 1a of amorphous carbon to obtain second particles 12, and a third step of aggregating the second particles 12 to obtain an aggregate 13 and firing the aggregate 13 to form a fired body.

According to the method for manufacturing a composite active material for lithium secondary batteries of the present invention, it is possible to manufacture an electrode material whose volume change at the time of initial charge is suppressed, and to manufacture a composite active material for lithium secondary batteries that can achieve a lithium secondary battery having a high capacity and excellent cycle characteristics.

In the above-described manufacturing method, the polymer film is formed using, for example, a monomer, an initiator, and optionally a dispersant. The solution preferably contains a dispersant.

In the above-described manufacturing method, the firing is performed, for example, in an inert atmosphere.

The third step may include a step of mixing the second particles with crystalline carbon as necessary to obtain a first mixture, a step of granulating and compacting the first mixture to obtain a second mixture, a step of pulverizing and spheroidizing the second mixture to form substantially spherical composite particles, and a step of firing the composite particles as a fired body in an inert atmosphere.

The above-described manufacturing method may or may not further include a fourth step of coating the fired body with carbon, and preferably includes the fourth step.

The Si-based material is preferably a powder having a particle size (D50) of 0.01 to 5 $\mu$m. To obtain a Si-based material having a predetermined particle size, a raw material of the above-described Si-based material (in the form of ingot, wafer, powder, or the like) is pulverized using a pulverizer. In some cases, a classifier is used. When the raw material of the Si-based material is a block such as an ingot or a wafer, the raw material can be first pulverized using a coarse pulverizer such as a jaw crusher, and then finely pulverized using a fine pulverizer. Examples of the fine pulverizer include ball mills and medium-stirring mills in which pulverizing media such as balls or beads are moved and the material to be pulverized is pulverized by using impact force, friction force, and compression force caused by the kinetic energy of the pulverizing media; roller mills in which the material to be pulverized is pulverized by using compression force exerted by rollers; jet mills in which the material to be pulverized is caused to collide with a lining member at high speed or particles are caused to collide with each other to perform pulverization using the impact force; hammer mills, blade mills, pin mills, and disk mills in which the material to be pulverized is pulverized by using impact force caused by rotation of a rotor to which hammers, blades, pins, or the like are fixed; colloid mills which use shearing force; and a high-pressure wet counter collision disperser "Ultimizer".

The pulverization may be either wet pulverization or dry pulverization. For finer pulverization, ultrafine particles can be obtained, for example, by using a wet bead mill while reducing the diameter of beads stepwise. To adjust the particle size distribution after the pulverization, dry classification, wet classification, or sieve classification can be used. The dry classification is carried out mainly using an air stream, and processes of dispersion, separation (separation between fine particles and coarse particles), collection (separation between solid and gas), and ejection are successively or simultaneously caused. To prevent a decrease in classification efficiency due to, for example, the interference between particles, the particle shape, the turbulence of an air stream, the velocity distribution, and the influence of static electricity, pretreatment (adjustment of, for example, moisture, dispersibility, and humidity) or adjustment of the moisture and oxygen concentration of an air stream used is performed before classification. In a dry type integrated with a dry classifier, pulverization and classification can be performed at a time to obtain a desired particle size distribution.

Examples of other methods for obtaining an Si-based material having a predetermined particle size include a method in which an Si-based material is heated for evaporation using plasma, laser, or the like and solidified in an inert atmosphere, and a method in which an Si-based material is obtained by CVD, plasma CVD, or the like using a gas raw material. These methods are suitable for obtaining ultrafine particles having a particle size of 0.1 $\mu$m or less.

The surface of the Si-based material may be modified or not modified, but is preferably modified in advance to accelerate the reaction between the Si-based material and a monomer. The term "modification" used herein refers to a process in which the surface state of the Si-based material is changed by a chemical reaction using a surface modifier to facilitate coating with a polymer (polymer film). The surface modifier used is preferably at least one compound selected from the group consisting of a molecule having an alkoxide group, a carboxy group, or a hydroxy group therein, a base, and an oxidizing agent. Specific examples of the surface modifier include vinyl surface modifiers such as vinyltrimethoxysilane and vinyltriethoxysilane; epoxy surface modifiers such as 3-glycidoxypropylmethyldimethoxysilane, 3-glycidoxypropylmethyldiethoxysilane, 3-glycidoxypropyltrimethoxysilane, and 3-glycidoxypropyltriethoxysilane; styryl surface modifiers such as p-styryltrimethoxysilane; methacrylic surface modifiers such as 3-methacryloxypropylmethyldimethoxysilane, 3-methacryloxypropyltrimethoxysilane, 3-methacryloxypropylmethyldiethoxysilane, and 3-methacryloxypropyltriethoxysilane; acrylic surface modifiers such as 3-acryloxypropyltrimethoxysilane; isocyanurate surface modifiers such as tris-(trimethoxysilylpropyl) isocyanurate; isocyanate surface modifiers such as 3-isocyanatopropyltriethoxysilane; tetraethoxysilane; oxidizing agents such as hydrochloric acid, hydrogen peroxide, nitric acid, sulfuric acid, potassium permanganate, potassium dichromate, sodium hypochlorite, chromium trioxide, ammonium persulfate, and potassium persulfate; and bases such as ammonia, sodium hydroxide, potassium hydroxide, sodium hydrogen carbonate, potassium hydrogen carbonate, sodium carbonate, and potassium carbonate. The surface modifier is preferably at least one selected from the group consisting of 3-methacryloxypropylmethyldimethoxysilane, 3-methacryloxypropyltrimethoxysilane, 3-methacryloxypropylmethyldiethoxysilane, 3-methacryloxypropyltriethoxysilane, tetraethoxysilane, hydrogen peroxide, nitric acid, hydrochloric acid, ammonia, and sodium hydroxide, and particularly preferably at least one selected from the group consisting of 3-methacryloxypropyltrimethoxysilane, tetraethoxysilane, hydrochloric acid, and ammonia.

When the surface modifier is used, the surface modifier is preferably added in an amount of 0.1 to 800 parts by mass relative to 100 parts by mass of the Si-based material. To prevent aggregation of particles during the modification reaction, a polycarboxylic acid-based stabilizer may be optionally added. To accelerate the modification reaction, a residual reaction accelerator may be optionally added. Examples of the residual reaction accelerator include compounds that exhibit alkalinity when dissolved in water, such as ammonia, sodium hydroxide, potassium hydroxide, and sodium hydrogen carbonate; and compounds that exhibit acidity when dissolved in water, such as hydrochloric acid, nitric acid, acetic acid, and sulfuric acid. Ammonia, hydrochloric acid, or nitric acid is preferably used because the reactivity is high and no metal compound is left. When the residual reaction accelerator is used, the residual reaction accelerator is preferably added in an amount of 0.005 to 54 parts by mass relative to 100 parts by mass of the Si-based material. The solvent used in the reaction may be any solvent capable of dissolving the surface modifier. Examples of the solvent include water, ethanol, methanol, acetone, dimethylformamide, tetrahydrofuran, toluene, hexane, dichloromethane, and chloroform. The solvent may be a mixed solvent of two or more of the foregoing solvents as necessary. When the surface of the Si particles is modified using 3-methacryloxypropyltrimethoxysilane or tetraethoxysilane as the surface modifier, a mixed solvent of water and ethanol is preferably used. The ratio of solvents in the mixed solvent is preferably 10 to 100 parts by mass of water relative to 100 parts by mass of ethanol. When the ratio of water to ethanol in the mixed solvent is within this range, the Si-based material in the solvent is easily dispersed, and the modification reaction readily proceeds in a sufficient manner.

After the surface of the Si-based material is modified, the surface-modified Si-based material may be crushed into fine particles using a ball mill or a bead mill if necessary. The balls used for crushing are preferably made of zirconia or alumina. The crushing time is preferably 1 to 24 hours and more preferably 1 to 12 hours.

After the surface-modified Si-based material is crushed into fine particles, the fine particles of the surface-modified Si-based material may be separated by centrifugal separation if necessary. At this time, in the centrifugal separation, the solvent used for modifying the surface of the Si-based material may be replaced with water.

During the reaction between the Si-based material and a monomer, preferably, the raw materials are uniformly mixed using a typical mixer or stirrer such as a magnetic stirrer, a three-one motor, a homomixer, an in-line mixer, a bead mill, or a ball mill. The reaction temperature is preferably 40 to 100°C. The reaction time is preferably 0.5 to 72 hours and more preferably 0.5 to 24 hours. When the reaction time is within this range, the reaction between the Si-based material and the monomer sufficiently proceeds, and the productivity is less likely to decrease.

Examples of the monomer to be reacted with the Si-based material include styrene; methacrylic acid-based monomers such as methacrylic acid, methyl methacrylate, ethyl methacrylate, n-propyl methacrylate, isopropyl methacrylate, n-butyl methacrylate, sec-butyl methacrylate, isobutyl methacrylate, tert-butyl methacrylate, 2-ethylhexyl methacrylate, isobonyl methacrylate, benzyl methacrylate, 2-hydroxyethyl methacrylate, hydroxypropyl methacrylate, hydroxybutyl methacrylate, and triethylene glycol methacrylate; acrylic acid-based monomers such as itaconic anhydride, itaconic acid, acrylic acid, methyl acrylate, ethyl acrylate, n-propyl acrylate, isopropyl acrylate, n-butyl acrylate, sec-butyl acrylate, isobutyl acrylate, tert-butyl acrylate, 2-ethylhexyl acrylate, isobornyl acrylate, benzyl acrylate, phenyl acrylate, glycidyl acrylate, 2-hydroxyethyl acrylate, hydroxypropyl acrylate, and hydroxybutyl acrylate; methacrylamide-based monomers such as methacrylamide, N-methylacrylamide, N,N'-dimethylacrylamide, N-tert-butylmethacrylamide, N-n-butylmethacrylamide, N-methylolmethacrylamide, and N-ethylolmethacrylamide; acrylamide-based monomers such as N,N'-methylenebisacrylamide, N-isopropylacrylamide, N-tert-butylacrylamide, N-n-butylacrylamide, N-methylolacrylamide, and N-ethylolacrylamide; vinyl benzoate; diethylaminostyrene; diethylamino α-methylstyrene; p-vinylbenzenesulfonic acid; sodium p-vinylbenzenesulfonate; lithium p-vinylbenzenesulfonate; divinylbenzene; vinyl acetate; butyl acetate; vinyl chloride; vinyl fluoride; vinyl bromide; maleic anhydride; N-phenylmaleimide; N-butylmaleimide; N-vinylpyrrolidone;

N-vinylcarbazole; acrylonitrile; aniline; pyrrole; and polyol monomers or isocyanate monomers used for urethane polymerization. The high-molecular-weight monomer is preferably styrene; a methacrylic acid-based monomer such as methacrylic acid, methyl methacrylate, ethyl methacrylate, n-propyl methacrylate, isopropyl methacrylate, n-butyl methacrylate, sec-butyl methacrylate, isobutyl methacrylate, tert-butyl methacrylate, 2-ethylhexyl methacrylate, isobonyl methacrylate, benzyl methacrylate, 2-hydroxyethyl methacrylate, hydroxypropyl methacrylate, hydroxybutyl methacrylate, or triethylene glycol methacrylate; an acrylic acid-based monomer such as itaconic anhydride, itaconic acid, acrylic acid, methyl acrylate, ethyl acrylate, n-propyl acrylate, isopropyl acrylate, n-butyl acrylate, sec-butyl acrylate, isobutyl acrylate, tert-butyl acrylate, 2-ethylhexyl acrylate, isobornyl acrylate, benzyl acrylate, phenyl acrylate, glycidyl acrylate, 2-hydroxyethyl acrylate, hydroxypropyl acrylate, or hydroxybutyl acrylate; divinylbenzene; or acrylonitrile. The high-molecular-weight monomer is more preferably styrene, methyl methacrylate, ethyl methacrylate, n-propyl methacrylate, n-butyl methacrylate, methyl acrylate, ethyl acrylate, n-propyl acrylate, n-butyl acrylate, or acrylonitrile. The high-molecular-weight monomer is particularly preferably styrene, methyl methacrylate, methyl acrylate, or acrylonitrile.

Examples of the initiator used include azo compounds such as azobisisobutyronitrile; potassium persulfate; ammonium persulfate; and peroxides such as benzoyl peroxide, diisobutyryl peroxide, di-n-propyl peroxydicarbonate, diisopropyl peroxydicarbonate, dilauroyl peroxide, dibenzoyl peroxide, 1,1-di(tert-hexylperoxy)cyclohexane, 1,1-di(tert-butylperoxy)cyclohexane, tert-butylhydroperoxide, diisobutyryl peroxide, tert-hexylperoxyisopropyl monocarbonate, tert-butylperoxyisopropyl monocarbonate, 2,5-dimethyl-2,5-di(benzoylperoxy)hexane, tert-butylperoxy acetate, di-tert-hexyl peroxide, di-tert-butyl peroxide, diisopropylbenzene hydroperoxide, and tert-butyl hydroperoxide.

Examples of the solvent used for obtaining a monomer slurry include water, ethanol, methanol, isopropyl alcohol, propanol, and toluene. The solvent is preferably water, ethanol, or methanol and particularly preferably water or ethanol. They may be used alone or in combination of two or more.

The content of the monomer in the monomer slurry is preferably 0.5 to 20 wt% and particularly preferably 0.5 to 10 wt%. When the content of the monomer is within this range, the coating around the Si-based material can have a sufficient thickness.

The content of the initiator in the monomer slurry is preferably 0.01 to 3 wt% and particularly preferably 0.01 to 1 wt%.

The monomer slurry preferably contains a dispersant to improve the dispersibility of the Si-based material or to accelerate polymerization. Examples of the dispersant include polyvinyl alcohol; polyvinylpyrrolidone; styrenesulfonic acid-based dispersants such as sodium styrene sulfonate, lithium styrene sulfonate, ammonium styrene sulfonate, and ethyl styrene sulfonate ester; polycarboxylic acid-based dispersants such as carboxystyrene, polyacrylic acid, and polymethacrylic acid; naphthalenesulfonic acid-formalin condensate-based dispersants; polyethylene glycol; polycarboxylic acid partial alkyl ester-based dispersants; polyether-based dispersants; polyalkylenepolyamine-based dispersants; alkylsulfonic acid-based dispersants; quaternary ammonium-based dispersants; higher alcohol alkylene oxide-based dispersants; polyhydric alcohol ester-based dispersants; alkylpolyamine-based dispersants, and polyphosphate-based dispersants. The dispersant is preferably a polyacrylic acid-based additive (dispersant), a styrenesulfonic acid-based dispersant, or polyvinylpyrrolidone and particularly preferably a styrenesulfonic acid-based dispersant or polyvinylpyrrolidone.

The content of the dispersant in the monomer slurry is preferably 3 wt% or less and particularly preferably 0.001 to 2 wt%. When the content of the dispersant is within this range, the aggregation of the Si-based materials is less likely to proceed. Alternatively, the thickness of the polymer (polymer film) around the Si-based material is less likely to decrease.

The monomer slurry may contain a polymerization accelerator to accelerate polymerization. Examples of the polymerization accelerator include pH adjusters such as sodium hydrogen carbonate and potassium hydroxide. The polymerization accelerator is preferably sodium hydrogen carbonate.

The obtained polymer film coated on the Si-based material is removed by firing described later to form voids.

The method for mixing or coating, with a precursor of amorphous carbon, the Si-based material (first particles) coated with the polymer film is any of the following manufacturing methods 1 and 2.

Manufacturing method 1: a method in which a polymer serving as a precursor of amorphous carbon is mixed or coated around a polymer film by polymerization

Manufacturing method 2: a method in which mixing or coating is performed by subjecting a Si-based material (first particles) coated with a polymer film and a precursor of amorphous carbon to wet mixing or dry mixing

The polymer serving as a precursor of amorphous carbon used in the manufacturing method 1 is not particularly limited as long as the polymer is carbonized by firing to form amorphous carbon. Examples of the polymer include polyimide resin, polyaniline, polypyrrole, polyvinyl alcohol, polyacrylonitrile, and poly(p-phenylene vinylene). Among them, polyaniline, polypyrrole, and polyacrylonitrile are preferred. The polymer serving as a precursor of amorphous carbon is particularly preferably polyaniline or polyacrylonitrile. Among them, polyacrylonitrile is more preferable. In this case, a denser matrix is obtained, and the infiltration of the electrolyte solution into the composite active material is suppressed. This suppresses the decomposition of the electrolyte solution inside the composite active material and improves the cycle characteristics.

When the polymer is mixed or coated by polymerization, the above-described initiator, monomer, dispersant, polymerization accelerator, and solvent can be used.

Herein, the first particles serve as seeds for accelerating the reaction. Therefore, a surface modifier is not necessarily added, but the above-described surface modifier may be optionally added.

The precursor of amorphous carbon used in the manufacturing method 2 is not particularly limited as long as the precursor is fired to form amorphous carbon. Examples of the precursor include polyaniline, polypyrrole, polyacrylonitrile, polyvinyl alcohol, polyglycerin, poly(p-phenylene vinylene), polyimide resin, resorcinol-formaldehyde resin, phenolic resin, epoxy resin, melamine resin, urea resin, cyanate resin, furan resin, ketone resin, unsaturated polyester resin, urethane resin, acrylonitrile-styrene (AS) resin, acrylonitrile-butadiene-styrene (ABS) resin, pyrrole, dopamine, ammonium alginate, saccharides such as cellulose, glucose, saccharin, and fructose, coal pitch (e.g., coal tar pitch), petroleum pitch, mesophase pitch, coke, low-molecular-weight heavy oil, and derivatives thereof. Among them, polyaniline, polypyrrole, polyacrylonitrile, polyvinyl alcohol, polyimide resin, resorcinol-formaldehyde resin, phenolic resin, dopamine, saccharides such as glucose, saccharin, and fructose, coal pitch (e.g., coal tar pitch), petroleum pitch, and derivatives thereof are preferred. The precursor of amorphous carbon is particularly preferably polyaniline, polyacrylonitrile, polyvinyl alcohol, phenolic resin, coal pitch (e.g., coal tar pitch), or a derivative thereof.

The method for mixing the first particles and the precursor of amorphous carbon is not particularly limited. The method is, for example, a method in which a dried product of the first particles and the precursor of amorphous carbon are mixed with each other in a solid state, a method in which a dried product of the first particles is impregnated with a slurry containing the precursor of amorphous carbon to perform mixing, or a method in which the precursor of amorphous carbon is added to a slurry containing the first particles to perform mixing in a liquid phase.

The method in which a dried product of the first particles and the precursor of amorphous carbon are mixed with each other in a solid state is preferably performed, for example, by drying the first particles and then mixing the dried product of the first particles and the precursor of amorphous carbon in a mortar, or by mixing the dried product of the first particles and the precursor of amorphous carbon using a ball mill, a bead mill, a pot mill, a roller mill, a jet mill, or the like. The method is particularly preferably performed by mixing the dried product of the first particles and the precursor of amorphous carbon in a mortar or a ball mill.

The method in which a dried product of the first particles is impregnated with a slurry containing the precursor of amorphous carbon to perform mixing is, for example, a method that includes drying the first particles, then dissolving a precursor of amorphous carbon in a solvent to form a solution or dispersing the precursor in a solvent to form a slurry, and adding the dried product of the first particles in the solution or the slurry to perform mixing, or a method that includes dissolving a precursor of amorphous carbon in a solvent at a high concentration to form a viscous solution or dispersing the precursor in a solvent at a high concentration to form a viscous slurry, and adding the solution or slurry to the dried product of the first particles to perform mixing. The solvent is not particularly limited as long as the solvent can dissolve or disperse the precursor of amorphous carbon. Examples of the solvent include alcohols such as ethanol, methanol, and isopropyl alcohol, ethers such as tetrahydrofuran and diethyl ether, aromatic compounds such as benzene, nitrobenzene, toluene, and xylene, pyridine, piperidine, cyclohexanone, cyclohexane, hexane, ethyl acetate, acetone, dichloromethane, chloroform, creosote oil, glycerin, and water. Among them, the solvent is preferably an alcohol such as ethanol or methanol, an ether such as tetrahydrofuran, an aromatic compound such as toluene or xylene, cyclohexanone, or water and particularly preferably ethanol, xylene, or water. The mixing method is not particularly limited, and a typical mixer or stirrer such as a magnetic stirrer, a three-one motor, a homomixer, an in-line mixer, a bead mill, or a ball mill can be used.

The method in which the precursor of amorphous carbon is added to a slurry containing the first particles to perform mixing in a liquid phase is not particularly limited. A typical mixer or stirrer such as a magnetic stirrer, a three-one motor, a homomixer, an in-line mixer, a bead mill, or a ball mill can be used. The solvent for forming the slurry is not particularly limited. Examples of the solvent include alcohols such as ethanol, methanol, and isopropyl alcohol, ethers such as tetrahydrofuran and diethyl ether, aromatic compounds such as benzene, nitrobenzene, toluene, and xylene, pyridine, piperidine, cyclohexanone, cyclohexane, hexane, ethyl acetate, acetone, dichloromethane, chloroform, creosote oil, glycerin, and water. Among them, the solvent is preferably an alcohol such as ethanol or methanol, an ether such as tetrahydrofuran, an aromatic compound such as toluene or xylene, cyclohexanone, or water and particularly preferably ethanol, xylene, or water.

The temperature at which a plurality of mixtures (second particles) obtained by mixing or coating the first particles with the precursor of amorphous carbon are aggregated and fired is preferably 300 to 1500°C, more preferably 500 to 1300°C, and particularly preferably 600 to 1100°C. When the firing temperature is 300°C or higher, the polymer formed around the Si-based material is not easily left. This suppresses a decrease in initial volumetric discharge capacity, and also suppresses a decrease in initial charge-discharge efficiency and an increase in initial electrode expansion ratio. On the other hand, when the firing temperature is 1500°C or lower, a reaction between the Si-based material and an inert gas described below is less likely to occur, which tends to suppress a decrease in discharge capacity.

The firing is preferably performed in an inert gas atmosphere. The inert gas is preferably nitrogen, argon, helium, or the like and particularly preferably nitrogen.

As a result of this firing, the polymer film 3a around the Si-based material 2 is volatilized to form a void 3 around the Si-based material 2. At the same time, the precursor of amorphous carbon of an aggregate 13 of second particles is carbonized to form a matrix 1. Thus, composite particles of the amorphous carbon and the Si-based material are produced as a fired body.

Examples of the method for coating the composite particles with carbon include a method for coating the composite particles with carbon by a CVD (chemical vapor deposition) method, a method for coating the composite particles with carbon by vaporizing a carbon precursor under heating, and a method for coating the composite particles with carbon by mixing the composite particles with a carbon precursor and further firing the mixture.

In the method for coating the composite particles with carbon by a CVD method, carbon coating can be performed by heating a carbon compound.

Examples of the carbon compound used include methane, ethylene, acetylene, propylene, benzene, toluene, xylene, naphthalene, anthracene, pyrene, acenaphthylene, dihydroanthracene, diphenylene sulfide, thioxanthene, thianthrene, carbazole, acridine, and condensed polycyclic phenazine compounds. Among them, the carbon compound is preferably ethylene, acetylene, propylene, toluene, xylene, naphthalene, anthracene, or the like and particularly preferably ethylene, anthracene, toluene, or the like.

The temperature at which the carbon compound is heated is preferably 300 to 1500°C and particularly preferably 500 to 1100°C.

In the CVD method, it is sufficient that the carbon compound is coated on the composite particles as carbon. The CVD method may be performed under any of normal pressure and reduced pressure.

The carbon precursor used in the method for coating the composite particles with carbon by vaporizing a carbon precursor under heating is not particularly limited as long as the carbon precursor is fired to form carbon. Examples of the carbon precursor include polyaniline, polypyrrole, polyacrylonitrile, polyvinyl alcohol, polyglycerin, poly(p-phenylene vinylene), polyimide resin, resorcinol-formaldehyde resin, phenolic resin, epoxy resin, melamine resin, urea resin, cyanate resin, furan resin, ketone resin, unsaturated polyester resin, urethane resin, acrylonitrile-styrene (AS) resin, acrylonitrile-butadiene-styrene (ABS) resin, pyrrole, dopamine, ammonium alginate, saccharides such as cellulose, glucose, saccharin, and fructose, coal pitch (e.g., coal tar pitch), petroleum pitch, mesophase pitch, coke, low-molecular weight heavy oil, and derivatives thereof. Among them, polyaniline, polypyrrole, polyacrylonitrile, polyvinyl alcohol, polyimide resin, resorcinol-formaldehyde resin, phenolic resin, dopamine, saccharides such as glucose, saccharin, and fructose, coal pitch (e.g., coal tar pitch), petroleum pitch, or a derivative thereof is preferably used. Polyaniline, polyacrylonitrile, polyvinyl alcohol, phenolic resin, coal pitch (e.g., coal tar pitch), or a derivative thereof is particularly preferably used.

The heating temperature may be any temperature at which the carbon precursor is vaporized, and is preferably 300 to 1500°C, particularly preferably 500 to 1300°C, and more preferably 600 to 1100°C. When the heating temperature is 300°C or higher, the carbon precursor is not easily left. This suppresses a decrease in initial volumetric discharge capacity, and also suppresses a decrease in initial charge-discharge efficiency and an increase in initial electrode expansion ratio. On the other hand, when the heating temperature is 1500°C or lower, a reaction between the Si-based material and an inert gas described below is less likely to occur, which tends to suppress a decrease in discharge capacity.

The vaporization of the carbon precursor under heating is preferably performed in an inert gas atmosphere. Examples of the inert gas used include nitrogen, argon, and helium. Among them, nitrogen is preferred.

The coating method of the carbon precursor in the method for coating the composite particles with carbon by mixing the composite particles with a carbon precursor and further firing the mixture may be the same as the above-described method in which the first particles and an precursor of amorphous carbon are mixed with each other.

The carbon precursor in the method for coating the composite particles with carbon by mixing the composite particles with a carbon precursor and further firing the mixture may be the same as the carbon precursor used in the method for coating the composite particles with carbon by vaporizing a carbon precursor under heating.

The firing temperature may be any temperature at which the carbon precursor is vaporized, and is preferably 300 to 1500°C, particularly preferably 500 to 1300°C, and more preferably 600 to 1100°C. When the firing temperature is 300°C or higher, the carbon precursor is not easily left. This suppresses a decrease in initial volumetric discharge capacity, and also suppresses a decrease in initial charge-discharge efficiency and an increase in initial electrode expansion ratio. On the other hand, when the firing temperature is 1500°C or lower, a reaction between the Si-based material and an inert gas described below is less likely to occur, which tends to suppress a decrease in discharge capacity.

The firing of the carbon precursor is preferably performed in an inert gas atmosphere. Examples of the inert gas used include nitrogen, argon, and helium. Among them, nitrogen is preferred.

In the present invention, the crystalline carbon optionally mixed with the second particles may be, for example, natural graphite or synthetic graphite obtained by graphitizing pitch of petroleum or coal. Examples of the shape of the crystalline carbon include a flake shape, an oval shape, a spherical shape, a cylindrical shape, and a fiber-like shape.

It is also possible to use expanded graphite or a pulverized product of the expanded graphite. The expanded graphite is obtained by subjecting the crystalline carbon to acid treatment and oxidation treatment and then to heat treatment to cause expansion, thereby exfoliating a part between graphite layers into an accordion-like shape. It is also possible to use, for example, a graphene subjected to delamination by ultrasonic waves or the like. The expanded graphite or the pulverized product of expanded graphite is better in flexibility than other crystalline carbons. In the process of forming composite particles described later, substantially spherical composite particles can be easily formed through rebinding of pulverized particles. In this viewpoint, the expanded graphite or the pulverized product of expanded graphite is preferably used. The particle size of the crystalline carbon before mixing with the second particles is preferably 1 to 100 $\mu$m for natural graphite or synthetic graphite and 5 $\mu$m to 5 mm for expanded graphite, a pulverized product of the expanded graphite, or graphene.

When the crystalline carbon is mixed with the second particles, a carbon compound can be added because the Si-based material and the crystalline carbon can be further bound. The carbon compound is preferably a carbon compound that can bind the Si-based material and the crystalline carbon and that is free from carbon residue components after firing. Examples of the carbon compound include glycerin compounds such as glycerin, diglycerin, triglycerin, polyglycerin, diglycerin fatty acid esters, and triglycerin fatty acid esters; glycol compounds such as menthol, pentaerythritol, dipentaerythritol, tripentaerythritol, ethylene glycol, propylene glycol, diethylene glycol, polyethylene glycol, polyethylene oxide, and trimethylolpropane; and poly(diallyldimethylammonium chloride), and polyvinylpyrrolidone. The carbon compound is preferably glycerin, polyglycerin, poly(diallyldimethylammonium chloride), or polyvinylpyrrolidone and particularly preferably glycerin.

When the crystalline carbon is mixed with the second particles, a solvent is preferably used. Examples of the solvent include quinoline, pyridine, toluene, benzene, tetrahydrofuran, creosote oil, tetrahydrofuran, cyclohexanone, nitrobenzene, glycerin, menthol, polyvinyl alcohol, water, ethanol, and methanol.

The crystalline carbon can be mixed with the second particles using a kneading machine (kneader) or a Lödige mixer when the total solid content of the second particles and the crystalline carbon in the slurry containing the second particles and the crystalline carbon is high. When a solvent is used, a three-one motor, a stirrer, a Nauta mixer, a Lödige mixer, a Henschel mixer, a high-speed mixer, a homomixer, an in-line mixer, or the like can be used in addition to the above kneading machine.

In the case of removing the solvent used, the solvent can be removed by heating a jacket of such a machine. Alternatively, the solvent can be removed using, for example, a vibration dryer, a paddle dryer, a rotary evaporator, a thin-film evaporator, a spray dryer, a conical dryer, or a vacuum dryer. Before the drying process, solid-liquid separation can be performed using an apparatus such as a centrifugal separator, a filter press, a suction filter, or a pressure filter. When an excessively large amount of carbon compound remains, particles of the composite active material are joined to each other after firing and then need to be pulverized/crushed. This causes a decrease in the capacity of the negative electrode. Therefore, such solid-liquid separation is preferably performed.

By continuously performing stirring for 1 to 100 hours in the process of removing the solvent using such a machine, the mixture (first mixture) of the Si-based material, the crystalline carbon, and optionally the carbon compound is granulated and compacted. Alternatively, the mixture after removal of the solvent can be compressed with a compressor such as a roller compactor and coarsely pulverized with a crusher to perform granulation and compaction. The size of the granulated and compacted product is preferably 0.1 to 5 mm from the viewpoint of case of handling in the subsequent pulverization process.

The granulation and compaction method is preferably a dry pulverization method that uses a ball mill or a medium-stirring mill in which the material to be pulverized is pulverized by using compression force, a roller mill in which the material to be pulverized is pulverized by using compression force exerted by rollers, a jet mill in which the material to be pulverized is caused to collide with a lining member at high speed or particles are caused to collide with each other to perform pulverization using the impact force due to the impact, or a hammer mill, a blade mill, a pin mill, or a disk mill in which the material to be pulverized is pulverized by using impact force caused by rotation of a rotor to which a hammer, a blade, a pin, or the like is fixed. To adjust the particle size distribution after the pulverization, dry classification such as pneumatic classification or sieving is used. In an integrated model of a pulverizer and a classifier, pulverization and classification can be performed at a time to achieve a desired particle size distribution.

The method for subjecting the mixture (second mixture) obtained by granulation and compaction to pulverization and spheroidizing treatment is a method in which the mixture is pulverized by the above-described pulverization method to adjust the particle size and then passed through a dedicated spheroidizing machine, a method in which the above-described method of pulverizing the material to be pulverized using impact force produced by the above-described jet mill or by rotation of a rotor is repeatedly performed, or a method in which the mixture is spheroidized by extending the treatment time. Examples of the dedicated spheroidizing machine include Faculty (trade name), Nobilta (trade name), and Mechano Fusion (trade name) manufactured by Hosokawa Micron, COMPOSI manufactured by Nippon Coke & Engineering Co., Ltd., Hybridization System manufactured by Nara Machinery Co., Ltd., and Kryptron Orb and Kryptron Eddy manufactured by EarthTechnica Co., Ltd.

Substantially spherical composite particles can be obtained by performing the pulverization and the spheroidizing treatment.

The obtained composite particles are fired to obtain a fired body.

The firing temperature is preferably 300 to 1200°C and particularly preferably 600 to 1200°C. When the firing temperature is 300°C or higher, components that are not thermally decomposed in the polymer film coated on the Si-based material are not easily left. This suppresses a decrease in initial charge-discharge efficiency and an increase in initial charge expansion ratio. On the other hand, when the firing temperature is 1200°C or lower, a reaction between the Si-based material and carbon is less likely to occur, which suppresses a decrease in discharge capacity.

The composite particles are preferably fired in an inert gas atmosphere. Examples of the inert gas used include nitrogen, argon, and helium. Among them, nitrogen is preferred.

Examples of the method for coating the fired body with carbon include the above-described method for coating the fired body with carbon by a CVD method, the above-described method for coating the fired body with carbon by vaporizing a carbon precursor under heating, and the above-described method for coating the fired body with carbon by mixing the fired powder with a carbon precursor and further firing the mixture.

<Electrode composition for lithium secondary battery>

The electrode composition for lithium secondary batteries according to the present invention includes the composite active material for lithium secondary batteries according to the present invention, a binder, and a solvent.

According to the electrode composition for lithium secondary batteries of the present invention, it is possible to manufacture an electrode material whose volume change at the time of initial charge is suppressed, and to manufacture a lithium secondary battery electrode that can achieve a lithium secondary battery having a high capacity and excellent cycle characteristics.

A publicly known material can be used as the binder. Examples of the binder include fluororesins such as polyvinylidene fluoride and polytetrafluoroethylene, styrene-butadiene rubber (SBR), polyethylene, polyvinyl alcohol, carboxymethyl cellulose, polyacrylic acid, and glue.

Examples of the solvent include water, isopropyl alcohol, N-methylrrolidone, and dimethylformamide.

The electrode composition for lithium secondary batteries according to the present invention can be obtained by mixing the composite active material for lithium secondary batteries according to the present invention and a binder and forming a paste of the mixture using a solvent. When the paste is formed, the composite active material for lithium secondary batteries, the binder, and the solvent may be stirred and mixed using a publicly known stirrer, mixer, kneading machine, kneader, or the like, if necessary.

<Lithium secondary battery electrode>

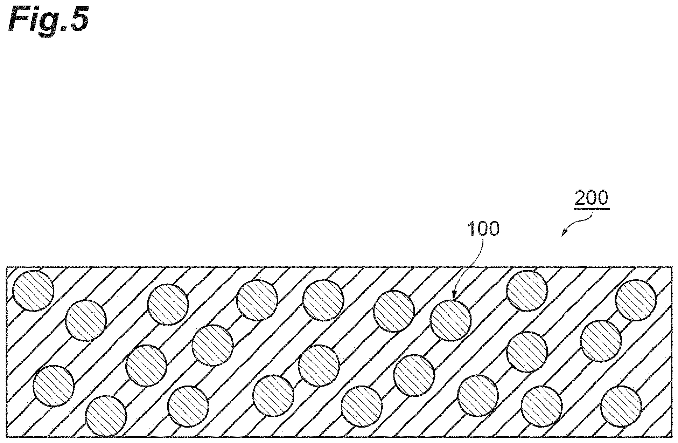

Next, a lithium secondary battery electrode according to the present invention will be described with reference to Fig. 5. Fig. 5 is a schematic view illustrating an example of the electrode according to the present invention. As illustrated in Fig. 5, a lithium secondary battery electrode 200 according to the present invention includes the composite active material 100 for lithium secondary batteries.

According to the lithium secondary battery electrode of the present invention, a lithium secondary battery whose volume change at the time of initial charge is suppressed and which has a high capacity and excellent cycle characteristics can be achieved.

The lithium secondary battery electrode according to the present invention is useful as a negative electrode of a lithium secondary battery.

A publicly known method can be used as the method for manufacturing a negative electrode for lithium secondary batteries using the composite active material for lithium secondary batteries according to the present invention.

For example, a negative electrode mixture-containing slurry is prepared as the above-described electrode composition for lithium secondary batteries. The negative electrode mixture-containing slurry can be applied onto a current collector, such as a copper foil, to obtain a negative electrode for lithium secondary batteries.

The current collector other than the copper foil is preferably a current collector having a three dimensional structure in terms of achieving more excellent cycle of a battery. Examples of the material for the current collector having a three dimensional structure include carbon fibers, sponge-like carbon (obtained by coating a sponge-like resin with carbon), and metals other than copper.

The current collector having a three dimensional structure (porous current collector) is, for example, a porous body of a conductor made of metal or carbon. Examples of such a porous body of a conductor include a plain-woven wire net, an expanded metal, a lath net, a metal foam, a metal woven fabric, a metal nonwoven fabric, a carbon fiber woven fabric, and a carbon fiber nonwoven fabric.

When the negative electrode mixture-containing slurry is prepared using the composite active material for lithium secondary batteries, at least one selected from the group consisting of conductive carbon black, carbon nanofiber, and carbon nanotube is preferably added as a conductive material. Even when the composite active material for lithium secondary batteries obtained in the above-described process has a granular shape (in particular, a substantially spherical shape), the addition of the at least one selected from the group consisting of carbon black, carbon nanofiber, and carbon nanotube to the negative electrode mixture-containing slurry suppresses a point contact between particles of the composite active material. The at least one selected from the group consisting of carbon black, carbon nanofiber, and carbon nanotube can be concentratedly aggregated in a capillary portion formed through contact of the composite active material for lithium secondary batteries during drying of the solvent of the slurry. Thus, contact breakage (increase in resistance) with cycles can be prevented.

The content of the at least one selected from the group consisting of carbon black, carbon nanofiber, and carbon nanotube is preferably 0.2 to 4 parts by mass and more preferably 0.5 to 2 parts by mass relative to 100 parts by mass of the composite active material for lithium secondary batteries. Examples of the carbon nanotube include single-wall carbon nanotubes and multi-wall carbon nanotubes.

<Lithium secondary battery>

The lithium secondary battery includes a negative electrode, which is the electrode described above, a positive electrode, an electrolyte solution, and a separator. The lithium secondary battery may further include other battery components (e.g., a current collector, a gasket, a sealing plate, and a case). The lithium secondary battery may have, for example, a cylindrical shape, a rectangular shape, or a button shape provided by using a typical method.

(Positive electrode)

The positive electrode used in a lithium secondary battery including a negative electrode obtained by using the composite active material for lithium secondary batteries according to the present invention may be a positive electrode formed using a publicly known positive electrode material.

The method for manufacturing a positive electrode is, for example, a publicly known method such as a method in which a positive electrode mixture formed of a positive electrode material, a binder, and a conductive agent is applied onto the surface of a current collector. Examples of the positive electrode material (positive electrode active material) include metal oxides such as chromium oxide, titanium oxide, cobalt oxide, and vanadium pentoxide; lithium metal oxides such as $LiCoO_2$, $LiNiO_2$, $LiNi_{1-y}Co_yO_2$, $LiNi_{1-x-y}Co_xAl_yO_2$, $LiMnO_2$, $LiMn_2O_4$, and $LiFeO_2$; chalcogen compounds of transition metals, such as titanium sulfide and molybdenum sulfide; and conjugated polymers having conductivity, such as polyacetylene, polyparaphenylene, and polypyrrole.

(Electrolyte solution)

The electrolyte solution used in a lithium secondary battery including a negative electrode obtained by using the composite active material for lithium secondary batteries according to the present invention may be a publicly known electrolyte solution.

For example, a lithium salt such as $LiPF_6$, $LiBF_4$, $LiAsF_6$, $LiClO_4$, $LiB(C_6H_5)_4$, $LiCl$, $LiBr$, $LiCF_3SO_3$, $LiCH_3SO_3$, $LiN(CF_3SO_2)_2$, $LiC(CF_3SO_2)_3$, $LiN(CF_3CH_2OSO_2)_2$, $LiN(CF_3CF_3OSO_2)_2$, $LiN(HCF_2CF_2CH_2OSO_2)_2$, $LiN\{(CF_3)_2CHOSO_2\}_2$, $LiB\{C_6H_3(CF_3)_2\}_4$, $LiN(SO_2CF_3)_2$, $LiC(SO_2CF_3)_3$, $LiAlCl_4$, or $LiSiF_6$ can be used as an electrolyte salt contained in the electrolyte solution. In particular, $LiPF_6$ and $LiBF_4$ are preferred from the viewpoint of oxidation stability.

The concentration of the electrolyte salt in the electrolyte solution is preferably 0.1 to 5 mol/liter and more preferably 0.5 to 3 mol/liter.

Examples of the solvent used in the electrolyte solution include carbonates such as ethylene carbonate, propylene carbonate, dimethyl carbonate, and diethyl carbonate; ethers such as 1,1- or 1,2-dimethoxyethane, 1,2-diethoxyethane, tetrahydrofuran, 2-methyltetrahydrofuran, $\gamma$-butyrolactone, 1,3-dioxofuran, 4-methyl-1,3-dioxolane, anisole, and diethyl ether; thioethers such as sulfolane and methylsulfolane; nitriles such as acetonitrile, chloronitrile, and propionitrile; and aprotic organic solvents such as trimethyl borate, tetramethyl silicate, nitromethane, dimethylformamide, N-methylpyrrolidone, ethyl acetate, trimethyl orthoformate, nitrobenzene, benzoyl chloride, benzoyl bromide, tetrahydrothiophene, dimethylsulfoxide, 3-methyl-2-oxazoline, ethylene glycol, and dimethyl sulfite.

Instead of the electrolyte solution, a polyelectrolyte such as a polymer solid electrolyte or a polymer gel electrolyte may be used. The polymer compound constituting the matrix of the polymer solid electrolyte or the polymer gel electrolyte is preferably an ether-based polymer compound such as polyethylene oxide or a crosslinked product thereof, a methacrylate-based polymer compound such as polymethacrylate, an acrylate-based polymer compound such as polyacrylate, or a fluorine-based polymer compound such as polyvinylidene fluoride (PVDF) or a vinylidene fluoride-hexafluoropropylene copolymer. They can also be used as a mixture. From the viewpoint of, for example, oxidation-reduction stability, a fluorine-based polymer compound such as PVDF or a vinylidene fluoride-hexafluoropropylene copolymer is particularly preferred.

(Separator)

The separator used in a lithium secondary battery including a negative electrode obtained by using the composite active material for lithium secondary batteries according to the present invention may be formed of a publicly known material. Examples of the separator include woven fabrics, nonwoven fabrics, and microporous membranes made of a synthetic resin. The microporous membrane made of a synthetic resin is suitably used. In particular, a polyolefin microporous membrane is suitably used in terms of, for example, membrane thickness, membrane strength, and membrane resistance. Specific examples of the microporous membrane include microporous membranes made of polyethylene or polypropylene and microporous membranes made of polyethylene and polypropylene in a combined manner.

The lithium secondary battery according to the present invention can be used in various portable electronic devices such as notebook computers, notebook word processors, palmtop (pocket) personal computers, cellular phones, portable facsimiles, portable printers, headphone stereos, video cameras, portable televisions, portable CD players, portable MD players, electric shavers, electronic organizers, transceivers, power tools, radios, tape recorders, digital cameras, portable copiers, and portable game machines. The lithium secondary battery according to the present invention can also be used as a secondary battery for electric vehicles, hybrid vehicles, vending machines, electric carts, energy storage systems for load leveling, home storage batteries, distributed energy storage systems (built in stationary electric appliances), and emergency power supply systems.

[Examples]

Hereafter, the present invention will be further described in detail by Examples, but the present invention is not limited thereto.

<Example 1>

(Silicon surface modification step)

An ethanol slurry containing silicon particles having a D50 of 200 nm was put into a beaker so that the amount of silicon was 17.5 g. The ethanol slurry was then subjected to ultrasonic irradiation for 15 minutes. Subsequently, ethanol was added so that the total amount of ethanol was 442 g, thereby obtaining a silicon slurry. Then, 39 g of a polycarboxylic acid-based dispersant, 1.0 g of hydrochloric acid, and 140 g of water were added to the silicon slurry. The resulting mixture was stirred at a rotation speed of 250 rpm for 30 minutes. Then, 35 g of tetraethoxysilane (TEOS) was added to the slurry, and the temperature was increased to 70°C. Stirring was performed at 70°C for 12 hours, and then the obtained silicon slurry was centrifuged at a rotation speed of 4800 rpm for a rotation time of 25 minutes. The obtained silicon was dispersed in ethanol again. The obtained slurry was treated with a ball mill using zirconia balls having a diameter of 1.0 mm for 8 hours to obtain a silicon slurry. The silicon slurry was centrifuged at a rotation speed of 4800 rpm for a rotation time of 60 minutes. The obtained silicon was dispersed in water again.

(Silicon coating step)

The slurry was weighed so that the silicon solid content was 13.9 g and transferred to a round-bottomed flask. Water was added thereto so that the total amount of water was 3800 g. The flask was purged with nitrogen, and then the liquid temperature was increased to 35°C. Subsequently, 0.53 g of 3-methacryloxypropyltrimethoxysilane (MPS) was added to the flask, and stirring was performed for 30 minutes. Subsequently, 88 g of a distilled styrene monomer was added to the flask, followed by addition of an aqueous lithium p-styrenesulfonate (LiSS) solution (LiSS concentration: 0.85 wt%) prepared by dissolving 0.43 g of lithium p-styrenesulfonate in 50 g of water. The resulting solution was stirred for 2 hours. Then, the liquid temperature was increased to 62°C. An aqueous ammonium persulfate (APS) solution (APS concentration: 2.2 wt%) prepared by dissolving 1.1 g of APS in 50 g of water was added to the flask. Then, heating and stirring were continued for 10 hours under reflux. The obtained reaction liquid was centrifuged at a rotation speed of 4800 rpm for a rotation time of 45 minutes. The resulting precipitate was dispersed in water again to obtain a polystyrene-coated silicon slurry.

The polystyrene-coated silicon slurry was weighed in a beaker so that the solid content was 29 g. Water was added thereto so that the total amount of water was 1380 g. The flask was purged with nitrogen, and then the liquid temperature was increased to 35°C. Then, 40 g of an acrylonitrile monomer was added thereto and stirring was performed for 2 hours. Then, the liquid temperature was increased to 62°C. An aqueous APS solution (APS concentration: 1.0 wt%) prepared by dissolving 0.4 g of APS in 40 g of water was added to the flask. Then, heating and stirring were continued for 10 hours under reflux. The obtained reaction liquid was centrifuged at a rotation speed of 4800 rpm for a rotation time of 25 minutes. The resulting precipitate was dispersed in ethanol again to obtain a polymer-coated silicon slurry.

Subsequently, 413 g of the polymer-coated silicon slurry (silicon content: 2.43 g), 5.67 g of expanded graphite, and 0.8 g of glycerin were put into a stirring vessel, and mixed under stirring using a homomixer for 20 minutes to obtain a mixed solution. The mixed solution was then transferred to a rotary evaporator. The mixed solution was heated to 40°C in a warm bath while the rotary evaporator was rotated, and the pressure was reduced with a diaphragm pump to remove the solvent. Then, the resulting product was spread over a vat in a draft chamber and dried while air was exhausted to obtain a dried mixture.

(Pressing step)

The dried mixture was passed through a three-roll mill twice, passed through a sieve having an opening of 1 mm, and granulated and compacted so that the light bulk density was 175 g/L to obtain a granulated and compacted product.

(Spheroidizing step)

Next, the granulated and compacted product was placed in a blade mill and pulverized at 15000 rpm for 360 seconds while being water-cooled, and simultaneously spheroidized to obtain a substantially spherical composite powder having a light bulk density of 253 g/L.

(Firing step)

The obtained powder was placed in a quartz boat and fired in a tube furnace at a maximum temperature of 900°C for 1 hour while flowing a nitrogen gas. Thus, a fired powder was obtained.

(Carbon coating step by vapor phase coating)

The obtained fired powder was set in a rotary firing furnace. A nitrogen gas with a flow rate of 267 mL/min and an ethylene gas with a flow rate of 133 mL/min were allowed to flow in the furnace, and the furnace was heated to 920°C with an electric heater while being rotated at 2 rpm. Carbon coating was performed by maintaining the state for 100 minutes. Thus, a composite active material for lithium secondary batteries was obtained. The obtained composite active material had a D50 of 29.4 $\mu$m and a BET specific surface area of 6.5 m$^2$/g.

(Manufacture of negative electrode for lithium secondary battery)

A negative electrode mixture-containing slurry was prepared by mixing 92.5 wt% of the obtained composite active material for lithium secondary batteries (the content in the total solid content, the same applies hereafter), 0.5 wt% of acetylene black serving as a conductive aid, 7.0 wt% of a polycarboxylic acid-based binder serving as a binder, and water.

The obtained negative electrode mixture-containing slurry was applied onto a copper foil having a thickness of 10 $\mu$m using an applicator so that the solid coating amount was 2.0 mg/cm$^2$, and dried in a vacuum dryer at 90°C for 12 hours. After drying, the resulting product was punched out into a 14 mm$\varphi$ circular shape, roll-pressed at 100°C at a feed rate of 1 m/min at a pressure of 4.0 t/cm$^2$, and further heat-treated under vacuum at 110°C for 2 hours to obtain a negative electrode for lithium secondary batteries in which a negative electrode mixture layer having a thickness of 35 $\mu$m was formed.

(Manufacture and evaluation of cell for evaluating initial charge expansion ratio)

A cell for evaluating an initial charge expansion ratio was prepared in a glove box by dipping the above-described negative electrode, a 24 mm$\varphi$ polypropylene separator, a 21 mm$\varphi$ glass filter, a 18 mm$\varphi$ metal lithium with a thickness of 0.2 mm, and a stainless steel foil serving as a base thereof in an electrolyte solution in a screw cell, stacking them in this order, and finally screwing a cap. The bottom portion and lid portion of the screw cell were made of conductive SUS. The negative electrode was brought into contact with the bottom portion of the screw cell, and the metal lithium was brought into contact with the lid portion. As the electrolyte solution used, used was an electrolyte solution in which FEC (fluoroethylene carbonate) was added to a mixed solvent containing ethylene carbonate and diethyl carbonate at a volume ratio of 1:1 so as to have a concentration of 2 vol%, and LiPF$_6$ was dissolved so as to have a concentration of 1.2 mol/liter.

The cell for evaluating an initial charge expansion ratio was placed in a sealed glass container further containing silica gel. The sealed glass container was sealed with a silicon rubber lid through which a pair of electrodes penetrated. At this time, the pair of electrodes were electrically connected to the bottom portion and the lid portion of the cell for evaluating an initial charge expansion ratio. Thereafter, the pair of electrodes were connected to a charge-discharge device.

The cell for evaluating an initial charge expansion ratio was subjected to a charge-discharge test in a thermostatic chamber at 25°C. For charging, constant current-constant voltage charging was performed. Charging was performed at 0.1 C to 0.005 V at a constant current of 0.5 mA and then performed at 0.05C at a constant voltage of 0.005 V until the current reached 0.03 mA (= 0.5/20). As a result, the initial charge capacity was 1024 mAh/g. This is about 2.8 times the capacity of graphite. Subsequently, the evaluation cell was disassembled in a glove box in an argon atmosphere. The thickness of the negative electrode was measured with a micrometer. As a result, the initial charge expansion ratio was 139%. The initial charge expansion ratio was calculated from the following formula.

$$\text{Initial charge expansion ratio (\%)} = (\text{Thickness of negative electrode after}$$

$$\text{charge/Thickness of negative electrode before charge}) \times 100$$

(Manufacture and evaluation of cell for evaluating cycle characteristics)

A cell for evaluating cycle characteristics (coin cell for evaluation) was prepared in a glove box by dipping the above-described negative electrode, a 21 mmφ glass filter, a 16 mmφ metal lithium with a thickness of 0.6 mm, and a stainless steel foil serving as a base thereof in an electrolyte solution in a coin cell, stacking them in this order, and finally screwing a cap. As the electrolyte solution, used was an electrolyte solution in which FEC (fluoroethylene carbonate) was added to a mixed solvent containing ethylene carbonate and diethyl carbonate at a volume ratio of 1:1 so as to have a concentration of 2 vol%, and LiPF$_6$ was dissolved so as to have a concentration of 1.2 mol/liter. The cell for evaluating cycle characteristics was placed in a sealed glass container further containing silica gel. The sealed glass container was sealed with a silicon rubber lid through which an electrode penetrated, and then the electrode was connected to a charge-discharge device.

The cell for evaluating cycle characteristics was subjected to a cycle test in a thermostatic chamber at 25°C. Charging was performed at 0.1 C to 0.005 V at a constant current of 0.5 mA and then performed at 0.05C at a constant voltage of 0.005 V until the current reached 0.03 mA (= 0.5/20).

Discharging was performed at a constant current of 0.5 mA to a voltage of 1.5 V. The initial discharge capacity and the initial charge-discharge efficiency were used as the results of the initial charge-discharge test. The cycle characteristics were evaluated as a charge-discharge efficiency at the 20th cycle when a charge-discharge test was performed 20 times under the above-described charge conditions and discharge conditions (charge-discharge conditions). The charge-discharge efficiency at the 20th cycle was 99.2%.

The obtained negative electrode was cut using a cross-section polisher. The section was observed at a magnification of 30,000 times using a SEM to obtain a sectional SEM image. Fig. 6 illustrates the result. The sectional SEM image illustrated in Fig. 6 showed that in the composite active material, the Si-based material was included in the amorphous carbon, a plurality of structures in which the Si-based material was included in the amorphous carbon were present, and the amorphous carbon included voids. That is, it was found that the composite active material had a plurality of voids in a matrix composed of amorphous carbon, and the Si-based material was accommodated in each of the voids. From the sectional SEM image, the ratio of the volume of the voids to the volume of the Si-based material was 3.0, the average size of the voids was 240 nm, the shortest distance between the Si-based material and the inner wall surface of each of the voids accommodating the Si-based material was 0 nm, the standard deviation of the sectional area distribution of the voids was 5.3 $\mu$m$^2$, the average number of the Si-based material accommodated in one void was 1.2, and the standard deviation of the sectional area distribution of the Si-based material was 4.5 $\mu$m$^2$ (refer to Table 1).

<Example 2>

(Silicon coating step)

A surface-modified silicon slurry prepared in the same manner as in the silicon surface modification step of Example 1 was weighed so that the silicon solid content was 22.2 g and transferred to a round-bottomed flask. Water was added thereto so that the total amount of water was 6120 g. The flask was purged with nitrogen, and then the liquid temperature was increased to 35°C. Then, 0.84 g of MPS was added to the flask and stirring was performed for 30 minutes. Subsequently, 140 g of a distilled styrene monomer was added thereto, followed by addition, to the flask, of an aqueous LiSS solution (LiSS concentration: 0.81 wt%) prepared by dissolving 0.65 g of LiSS in 80 g of water. Stirring was performed for 2 hours. Then, the liquid temperature was increased to 62°C. An aqueous APS solution (APS concentration: 2.2 wt%) prepared by dissolving 1.8 g of APS in 80 g of water was added thereto. Then, stirring was continued for 10 hours under reflux while heating was performed. The obtained reaction liquid was centrifuged at a rotation speed of 4800 rpm for a rotation time of 45 minutes. The resulting precipitate was dispersed in water again to obtain a polystyrene-coated silicon slurry.

The polystyrene-coated silicon slurry was weighed in a beaker so that the solid content was 9.0 g. Water was added thereto so that the total amount of water was 276 g. The flask was purged with nitrogen, and then the liquid temperature was increased to 35°C. Then, 80 g of an acrylonitrile monomer was added thereto and stirring was performed for 2 hours. Then, the liquid temperature was increased to 62°C. An aqueous APS solution (APS concentration: 1.0 wt%) prepared by dissolving 0.4 g of APS in 40 g of water was added thereto. Then, heating and stirring were continued for 10 hours under reflux. The obtained reaction liquid was centrifuged at a rotation speed of 4800 rpm for a rotation time of 25 minutes. The resulting precipitate was dried with a dryer to obtain a polymer-coated silicon dried powder.

(Pulverizing and spheroidizing step)

Subsequently, the dried powder was put into a blade mill. The dried powder was pulverized at 15000 rpm for 150 seconds under water cooling and, at the same time, spheroidized.

(Firing step)

The obtained powder was placed in a quartz boat and fired in a tube furnace at a maximum temperature of 900°C for 1 hour while flowing a nitrogen gas. Thus, a fired powder was obtained.

(Carbon coating step by vapor phase coating)

The obtained fired powder was set in a rotary firing furnace. A nitrogen gas with a flow rate of 267 mL/min and an ethylene gas with a flow rate of 133 mL/min were allowed to flow in the furnace, and the furnace was heated to 920°C with an electric heater while being rotated at 2 rpm. Carbon coating was performed by maintaining the state for 23 minutes. Thus, a composite active material for lithium secondary batteries was obtained. The pore size of the obtained composite active material was measured to be 22 nm.

Using the obtained composite active material for lithium secondary batteries, a negative electrode was manufactured in the same manner as in Example 1. For the obtained negative electrode, a sectional SEM image was obtained in the same manner as in Example 1. The sectional SEM image showed that the composite active material had a plurality of voids in a matrix composed of amorphous carbon, and the Si-based material was accommodated in each of the voids. The ratio of the volume of the voids to the volume of the Si-based material, the average size of the voids, the shortest distance between the Si-based material and the inner wall surface of each of the voids accommodating the Si-based material, the standard deviation of the sectional area distribution of the voids, the average number of the Si-based material accommodated in one void, and the standard deviation of the sectional area distribution of the Si-based material were determined. Table 1 shows the results. The half-width of an X-ray diffraction peak of the (002) plane of the amorphous carbon was 7.5°.

(Charge-discharge test)

A negative electrode, a cell for evaluating an initial charge expansion ratio and a cell for evaluating cycle characteristics were manufactured in the same manner as in Example 1, and a charge-discharge test and a cycle test were performed. Table 1 shows the results. Note that "-" indicates that the corresponding numerical value was not determined. As shown in Table 1, the initial charge capacity was 1082 mAh/g, the initial charge expansion ratio was 126%, and the charge-discharge efficiency at the 20th cycle was 99.4%.

<Example 3>

(Silicon coating step)

To the polystyrene-coated silicon slurry obtained in the same manner as in the silicon coating step of Example 1, 0.91 g of aniline and 1.0 mL of hydrochloric acid were added. Stirring was performed at room temperature for 2 hours. Then, 2.2 g of APS dissolved in 10 mL of water was added to the slurry and stirring was performed for 24 hours. The obtained reaction liquid was centrifuged at a rotation speed of 4800 rpm for a rotation time of 15 minutes. The resulting precipitate was dried with a dryer to obtain a polymer-coated silicon dried powder.

(Firing step)

The obtained dried powder was placed in a quartz boat and fired in a tube furnace at a maximum temperature of 900°C for 1 hour while flowing a nitrogen gas. Thus, a composite active material for lithium secondary batteries was obtained.

Using the obtained composite active material for lithium secondary batteries, a negative electrode was manufactured in the same manner as in Example 1. For the obtained negative electrode, a sectional SEM image was obtained in the same manner as in Example 1. The sectional SEM image showed that the composite active material had a plurality of voids in a matrix composed of amorphous carbon, and the Si-based material was accommodated in each of the voids. The ratio of the volume of the voids to the volume of the Si-based material, the average size of the voids, the shortest distance between the Si-based material and the inner wall surface of each of the voids accommodating the Si-based material, the standard deviation of the sectional area distribution of the voids, the average number of the Si-based material accommodated in one void, and the standard deviation of the sectional area distribution of the Si-based material were determined. Table 1 shows the results. Note that "-" indicates that the corresponding numerical value was not determined.

In Example 3, a cell for evaluating an initial charge expansion ratio and a cell for evaluating cycle characteristics were not manufactured, and a charge-discharge test and a cycle test were not performed.

<Example 4>

(Silicon coating step)

A silicon slurry prepared in the same manner as in the silicon surface modification step of Example 1 was weighed so that the silicon solid content was 16.6 g and transferred to a round-bottomed flask. Water was added thereto so that the total amount of water was 4593 g. The flask was purged with nitrogen, and then the liquid temperature was increased to 35°C. Then, 0.63 g of MPS was added to the flask and stirring was performed for 30 minutes. Subsequently, 105 g of a distilled styrene monomer was added to the flask, followed by addition, to the flask, of an aqueous LiSS solution (LiSS concentration: 0.81 wt%) prepared by dissolving 0.49 g of LiSS in 60 g of water. The obtained solution was stirred for 2 hours. Then, the liquid temperature was increased to 62°C. An aqueous APS solution (APS concentration: 2.2 wt%) prepared by dissolving 1.35 g of APS in 60 g of water was added thereto. Then, heating and stirring were continued for 10 hours under reflux to obtain a polystyrene-coated silicon slurry.

To the polystyrene-coated silicon slurry, 120 g of an acrylonitrile monomer was added. Stirring was performed at 35°C for 2 hours. Then, an aqueous APS solution (APS concentration: 2.2 wt%) prepared by dissolving 1.35 g of APS in 60 g of water was added to the slurry, and stirring was performed for 10 hours. The obtained reaction liquid was centrifuged at a rotation speed of 4800 rpm for a rotation time of 25 minutes. The resulting precipitate was dried to obtain a polymer-coated silicon dried powder.

(Firing step)

The obtained dried powder was placed in a quartz boat and fired in a tube furnace at a maximum temperature of 1100°C for 1 hour while flowing a nitrogen gas. Thus, a composite active material for lithium secondary batteries was obtained.

(Carbon coating step by vapor phase coating)

The obtained fired powder was set in a rotary firing furnace. A nitrogen gas with a flow rate of 267 mL/min and an ethylene gas with a flow rate of 133 mL/min were allowed to flow in the furnace, and the furnace was heated to 920°C with an electric heater while being rotated at 2 rpm. Carbon coating was performed by maintaining the state for 23 minutes. Thus, a composite active material for lithium secondary batteries was obtained. The pore size of the obtained composite active material was measured to be 12 nm.

Using the obtained composite active material for lithium secondary batteries, a negative electrode was manufactured in the same manner as in Example 1. For the obtained negative electrode, a sectional SEM image was obtained in the same manner as in Example 1. The sectional SEM image showed that the composite active material had a plurality of voids in a matrix composed of amorphous carbon, and the Si-based material was accommodated in each of the voids. The ratio of the volume of the voids to the volume of the Si-based material, the average size of the voids, the shortest distance between the Si-based material and the inner wall surface of each of the voids accommodating the Si-based material, the standard deviation of the sectional area distribution of the voids, the average number of the Si-based material accommodated in one void, and the standard deviation of the sectional area distribution of the Si-based material were determined. Table 1 shows the results.

(Charge-discharge test)

A cell for evaluating an initial charge expansion ratio and a cell for evaluating cycle characteristics were manufactured in the same manner as in Example 1, and a charge-discharge test and a cycle test were performed. Table 1 shows the results. As shown in Table 1, the initial charge capacity was 848 mAh/g, the initial charge expansion ratio was 118%, and the charge-discharge efficiency at the 20th cycle was 99.4%.

<Example 5>

(Silicon coating step)

A silicon slurry prepared in the same manner as in the silicon surface modification step of Example 1 was weighed so that the silicon solid content was 8.31 g and transferred to a round-bottomed flask. Water was added thereto so that the total amount of water was 2293.6 g. The flask was purged with nitrogen, and then the liquid temperature was increased to 35°C. Then, 0.315 g of MPS was added to the flask and stirring was performed for 30 minutes. Subsequently, 52.62 g of a distilled styrene monomer was added to the flask, followed by addition, to the flask, of an aqueous LiSS solution (LiSS concentration: 0.80 wt%) prepared by dissolving 0.242 g of LiSS in 30 g of water. The obtained solution was stirred for 2 hours. Then, the liquid temperature was increased to 62°C. An aqueous APS solution (APS concentration: 2.2 wt%) prepared by dissolving 0.675 g of APS in 30 g of water was added thereto. Then, heating and stirring were continued for 10 hours under reflux to obtain a polystyrene-coated silicon slurry.
To the polystyrene-coated silicon slurry, 52.71 g of an acrylonitrile monomer was added. Stirring was performed at 35°C for 2 hours. Then, an aqueous APS solution (APS concentration: 2.2 wt%) prepared by dissolving 0.675 g of APS in 30 g of water was added to the slurry, and stirring was performed for 10 hours. The obtained reaction liquid was centrifuged at a rotation speed of 4800 rpm for a rotation time of 25 minutes. The resulting precipitate was dispersed in water again and dried to obtain a polymer-coated silicon dried powder.

(Firing step)

The obtained dried powder was placed in a quartz boat and fired in a tube furnace at a maximum temperature of 1100°C for 1 hour while flowing a nitrogen gas. Thus, a composite active material for lithium secondary batteries was obtained.

(Carbon coating step by vapor phase coating)

In a rotary firing furnace, 1.42 g of the obtained fired powder was set. A nitrogen gas with a flow rate of 267 mL/min and an ethylene gas with a flow rate of 133 mL/min were allowed to flow in the furnace, and the furnace was heated to 920°C with an electric heater while being rotated at 2 rpm. Carbon coating was performed by maintaining the state for 32 minutes. Thus, a composite active material for lithium secondary batteries was obtained. The pore size of the obtained composite active material was measured to be 13 nm.
Using the obtained composite active material for lithium secondary batteries, a negative electrode was manufactured in the same manner as in Example 1. For the obtained negative electrode, a sectional SEM image was obtained in the same manner as in Example 1. The sectional SEM image showed that the composite active material had a plurality of voids in a matrix composed of amorphous carbon, and the Si-based material was accommodated in each of the voids. The ratio of the volume of the voids to the volume of the Si-based material, the average size of the voids, the shortest distance between the Si-based material and the inner wall surface of each of the voids accommodating the Si-based material, the standard deviation of the sectional area distribution of the voids, the average number of the Si-based material accommodated in one void, and the standard deviation of the sectional area distribution of the Si-based material were determined. Table 1 shows the results. Note that "-" in Table 1 indicates that the corresponding numerical value was not determined.

(Charge-discharge test)

A cell for evaluating an initial charge expansion ratio and a cell for evaluating cycle characteristics were manufactured in the same manner as in Example 1, and a charge-discharge test and a cycle test were performed. Table 1 shows the results. As shown in Table 1, the initial charge capacity was 1151 mAh/g, the initial charge expansion ratio was 116%, and the charge-discharge efficiency at the 20th cycle was 99.1%.

<Example 6>

(Silicon coating step)

A silicon slurry prepared in the same manner as in the silicon surface modification step of Example 1 was weighed so that the silicon solid content was 13.85 g and transferred to a round-bottomed flask. Water was added thereto so that the total amount of water was 3822.7 g. The flask was purged with nitrogen, and then the liquid temperature was increased to 35°C. Then, 0.525 g of MPS was added to the flask and stirring was performed for 30 minutes. Subsequently, 43.85 g of a distilled styrene monomer was added to the flask, followed by addition, to the flask, of an aqueous LiSS solution (LiSS concentration: 0.80 wt%) prepared by dissolving 0.403 g of LiSS in 50 g of water. The obtained solution was stirred for 2 hours. Then, the liquid temperature was increased to 62°C. An aqueous APS solution (APS concentration: 2.2 wt%) prepared by dissolving 1.125 g of APS in 50 g of water was added thereto. Then, heating and stirring were continued for 10 hours under reflux to obtain a polystyrene-coated silicon slurry.

To the polystyrene-coated silicon slurry, 75.3 g of an acrylonitrile monomer was added. Stirring was performed at 35°C for 2 hours. Then, an aqueous APS solution (APS concentration: 2.2 wt%) prepared by dissolving 1.125 g of APS in 50 g of water was added to the slurry, and stirring was performed for 10 hours. The obtained reaction liquid was centrifuged at a rotation speed of 4800 rpm for a rotation time of 25 minutes. The resulting precipitate was dispersed in water again and dried to obtain a polymer-coated silicon dried powder.

(Firing step)

The obtained dried powder was placed in a quartz boat and fired in a tube furnace at a maximum temperature of 1100°C for 1 hour while flowing a nitrogen gas. Thus, a composite active material for lithium secondary batteries was obtained.

(Carbon coating step by vapor phase coating)

In a rotary firing furnace, 1.64 g of the obtained fired powder was set. A nitrogen gas with a flow rate of 267 mL/min and an ethylene gas with a flow rate of 133 mL/min were allowed to flow in the furnace, and the furnace was heated to 920°C with an electric heater while being rotated at 2 rpm. Carbon coating was performed by maintaining the state for 37 minutes. Thus, a composite active material for lithium secondary batteries was obtained.

Using the obtained composite active material for lithium secondary batteries, a negative electrode was manufactured in the same manner as in Example 1. For the obtained negative electrode, a sectional SEM image was obtained in the same manner as in Example 1. The sectional SEM image showed that the composite active material had a plurality of voids in a matrix composed of amorphous carbon, and the Si-based material was accommodated in each of the voids. The ratio of the volume of the voids to the volume of the Si-based material, the average size of the voids, the shortest distance between the Si-based material and the inner wall surface of each of the voids accommodating the Si-based material, the standard deviation of the sectional area distribution of the voids, the average number of the Si-based material accommodated in one void, and the standard deviation of the sectional area distribution of the Si-based material were determined. Table 1 shows the results. Note that "-" in Table 1 indicates that the corresponding numerical value was not determined.

(Charge-discharge test)

A negative electrode, a cell for evaluating an initial charge expansion ratio, and a cell for evaluating cycle characteristics were manufactured in the same manner as in Example 1, and a charge-discharge test was performed. Table 1 shows the results. As shown in Table 1, the initial charge capacity was 1275 mAh/g, the initial charge expansion ratio was 116%, and the charge-discharge efficiency at the 20th cycle was 98.8%.

<Example 7>

(Silicon coating step)

A silicon slurry prepared in the same manner as in the silicon surface modification step of Example 1 was weighed so that the silicon solid content was 8.31 g and transferred to a round-bottomed flask. Water was added thereto so that the total amount of water was 2293.6 g. The flask was purged with nitrogen, and then the liquid temperature was increased to 35°C. Then, 0.315 g of MPS was added to the flask and stirring was performed for 30 minutes. Subsequently, 26.31 g of a distilled styrene monomer was added to the flask, followed by addition, to the flask, of an aqueous LiSS solution (LiSS concentration: 0.80 wt%) prepared by dissolving 0.242 g of LiSS in 30 g of water. The obtained solution was stirred for 2 hours. Then, the liquid temperature was increased to 62°C. An aqueous APS solution (APS concentration: 2.2 wt%) prepared by dissolving 0.675 g of APS in 30 g of water was added thereto. Then, heating and stirring were continued for 10 hours under reflux to obtain a polystyrene-coated silicon slurry.

To the polystyrene-coated silicon slurry, 37.65 g of an acrylonitrile monomer was added. Stirring was performed at 35°C for 2 hours. Then, an aqueous APS solution (APS concentration: 2.2 wt%) prepared by dissolving 0.675 g of APS in 30 g of water was added to the slurry, and stirring was performed for 10 hours. The obtained reaction liquid was centrifuged at a rotation speed of 4800 rpm for a rotation time of 25 minutes. The resulting precipitate was dispersed in water again and dried to obtain a polymer-coated silicon dried powder.

(Firing step)

The obtained dried powder was placed in a quartz boat and fired in a tube furnace at a maximum temperature of 1100°C for 1 hour while flowing a nitrogen gas. Thus, a composite active material for lithium secondary batteries was obtained.

(Carbon coating step by vapor phase coating)

In a rotary firing furnace, 2.02 g of the obtained fired powder was set. A nitrogen gas with a flow rate of 267 mL/min and an ethylene gas with a flow rate of 133 mL/min were allowed to flow in the furnace, and the furnace was heated to 920°C with an electric heater while being rotated at 2 rpm. Carbon coating was performed by maintaining the state for 45 minutes. Thus, a composite active material for lithium secondary batteries was obtained.

Using the obtained composite active material for lithium secondary batteries, a negative electrode was manufactured in the same manner as in Example 1. For the obtained negative electrode, a sectional SEM image was obtained in the same manner as in Example 1. The sectional SEM image showed that the composite active material had a plurality of voids in a matrix composed of amorphous carbon, and the Si-based material was accommodated in each of the voids. The ratio of the volume of the voids to the volume of the Si-based material, the average size of the voids, the shortest distance between the Si-based material and the inner wall surface of each of the voids accommodating the Si-based material, the standard deviation of the sectional area distribution of the voids, the average number of the Si-based material accommodated in one void, and the standard deviation of the sectional area distribution of the Si-based material were determined. Table 1 shows the results. Note that "-" in Table 1 indicates that the corresponding numerical value was not determined.

(Charge-discharge test)

A negative electrode, a cell for evaluating an initial charge expansion ratio, and a cell for evaluating cycle characteristics were manufactured in the same manner as in Example 1, and a charge-discharge test was performed. Table 1 shows the results. As shown in Table 1, the initial charge capacity was 1348 mAh/g, the initial charge expansion ratio was 122%, and the charge-discharge efficiency at the 20th cycle was 98.7%.

<Example 8>

(Silicon surface modification step)

An ethanol slurry containing silicon particles having a D50 of 200 nm was charged into a beaker so that the silicon content was 66.2 g. Ultrasonic irradiation was performed for 15 minutes. Then, ethanol was added so that the total amount of ethanol was 390 g, thereby obtaining a silicon slurry. Then, 145.6 g of a polycarboxylic acid-based dispersant, 0.36 g of hydrochloric acid, and 75.3 g of water were added to the silicon slurry. The resulting mixture was stirred at a rotation speed of 500 rpm for 30 minutes. Then, 132.4 g of tetraethoxysilane (TEOS) was added to the slurry, and the temperature was increased to 70°C. Stirring was performed at 70°C for 12 hours, and then the obtained silicon slurry was centrifuged at a rotation speed of 4800 rpm for a rotation time of 25 minutes. The resulting product was dispersed in water again. The obtained slurry was treated with a ball mill using zirconia balls having a diameter of 1.0 mm for 45 minutes to obtain a silicon slurry.

(Silicon coating step)

The silicon slurry was weighed so that the silicon solid content was 8.31 g and transferred to a round-bottomed flask. Water was added thereto so that the total amount of water was 2293.6 g. The flask was purged with nitrogen, and then the liquid temperature was increased to 35°C. Then, 0.315 g of MPS was added to the flask and stirring was performed for 30 minutes. Subsequently, 52.62 g of a styrene monomer from which a polymerization inhibitor was removed by column treatment was added to the flask, followed by addition, to the flask, of an aqueous LiSS solution (LiSS concentration: 0.80 wt%) prepared by dissolving 0.242 g of LiSS in 30 g of water. The obtained solution was stirred for 2 hours. Then, the liquid temperature was increased to 62°C. An aqueous APS solution (APS concentration: 2.2 wt%) prepared by dissolving 0.675 g of APS in 30 g of water was added thereto. Then, heating and stirring were continued for 10 hours under reflux to obtain a polystyrene-coated silicon slurry.

To the polystyrene-coated silicon slurry, 52.71 g of an acrylonitrile monomer was added. Stirring was performed at 35°C for 2 hours. Then, an aqueous APS solution (APS concentration: 2.2 wt%) prepared by dissolving 0.675 g of APS in 30 g of water was added to the slurry, and stirring was performed for 10 hours. The obtained reaction liquid was centrifuged at a rotation speed of 4800 rpm for a rotation time of 25 minutes. The resulting precipitate was dispersed in water again and dried to obtain a polymer-coated silicon dried powder.

(Firing step)

The obtained dried powder was placed in a quartz boat and fired in a tube furnace at a maximum temperature of 1100°C for 1 hour while flowing a nitrogen gas. Thus, a composite active material for lithium secondary batteries was obtained.

(Carbon coating step by vapor phase coating)

In a rotary firing furnace, 2.15 g of the obtained fired powder was set. A nitrogen gas with a flow rate of 267 mL/min and an ethylene gas with a flow rate of 133 mL/min were allowed to flow in the furnace, and the furnace was heated to 920°C with an electric heater while being rotated at 2 rpm. Carbon coating was performed by maintaining the state for 49 minutes. Thus, a composite active material for lithium secondary batteries was obtained.

Using the obtained composite active material for lithium secondary batteries, a negative electrode was manufactured in the same manner as in Example 1. For the obtained negative electrode, a sectional SEM image was obtained in the same manner as in Example 1. The sectional SEM image showed that the composite active material had a plurality of voids in a matrix composed of amorphous carbon, and the Si-based material was accommodated in each of the voids. The ratio of the volume of the voids to the volume of the Si-based material, the average size of the voids, the shortest distance between the Si-based material and the inner wall surface of each of the voids accommodating the Si-based material, the standard deviation of the sectional area distribution of the voids, the average number of the Si-based material accommodated in one void, and the standard deviation of the sectional area distribution of the Si-based material were determined. Table 1 shows the results. Note that "-" in Table 1 indicates that the corresponding numerical value was not determined.

(Charge-discharge test)

A cell for evaluating an initial charge expansion ratio and a cell for evaluating cycle characteristics were manufactured in the same manner as in Example 1, and a charge-discharge test and a cycle test were performed. Table 1 shows the results. As shown in Table 1, the initial charge capacity was 1271 mAh/g, the initial charge expansion ratio was 121%, and the charge-discharge efficiency at the 20th cycle was 98.7%.

<Comparative Example 1>

A composite active material for lithium secondary batteries of Comparative Example was prepared by mixing 3 parts by mass of silicon particles having a D50 of 200 nm with 7 parts by mass of graphite.

Using the obtained composite active material for lithium secondary batteries, a negative electrode was manufactured in the same manner as in Example 1. For the obtained negative electrode, a sectional SEM image was obtained in the same manner as in Example 1. The sectional SEM image showed that the composite active material accommodated the Si-based material in a matrix composed of amorphous carbon, but did not have voids. In Comparative Example 1, the ratio of the volume of the voids to the volume of the Si-based material, the average size of the voids, the shortest distance between the Si-based material and the inner wall surface of each of the voids accommodating the Si-based material, the standard deviation of the sectional area distribution of the voids, the average number of the Si-based material accommodated in one void, and the standard deviation of the sectional area distribution of the Si-based material were not measured. Therefore, each of the items is indicated by "-" in Table 1.

A cell for evaluating an initial charge expansion ratio and a cell for evaluating cycle characteristics were manufactured in the same manner as in Example 1, and a charge-discharge test and a cycle test were performed. Table 1 shows the results. As shown in Table 1, the initial charge capacity was 1112 mAh/g, the initial charge expansion ratio was 222%, and the charge-discharge efficiency at the 20th cycle was 98.4%.

From the above results, it was found that, in Examples, Si was accommodated in each of a plurality of voids included in the amorphous carbon, whereby a very high initial charge capacity was achieved and the initial charge expansion ratio was suppressed. It was also found that, in Examples, the charge-discharge efficiency at the 20th cycle was improved, which showed good charge-discharge cycle characteristics. This is believed to be because the decomposition of the electrolyte solution was suppressed by reducing the expansion of the composite active material.

[Table 1]

| | Example 1 | Example 2 | Example 3 | Example 4 | Example 5 | Example 6 | Example 7 | Example 8 | Comparative Example 1 |
|---|---|---|---|---|---|---|---|---|---|
| Presence or absence of voids | Presence | Presence | Presence | Presence | Presence | Presence | Presence | Presence | - |
| Ratio of volume of voids to volume of Si-based material | 3 | 3.9 | - | 3.7 | - | 3.8 | - | - | 0 |
| Average size of voids (nm) | 240 | 250 | 220 | 250 | - | 200 | - | - | - |
| Shortest distance between Si-based material and inner wall surface of void (nm) | 0 | 0 | 0 | 0 | 0 | 0 | 0 | - | - |
| Standard deviation of sectional area distribution of voids ($\mu$m$^2$) | 5.3 | - | - | - | - | - | - | - | - |
| Average number of Si-based material accommodated in one void (pieces) | 1.2 | 1.0 | 1.0 | 1.3 | 1.2 | 1.0 | - | - | - |
| Standard deviation of sectional area distribution of Si-based material ($\mu$m$^2$) | 4.5 | - | - | - | - | - | - | - | - |
| Particle size (D50) of composite active material ($\mu$m) | 29.4 | 24 | - | 12.3 | 13.6 | 9.9 | 14.3 | 11.6 | - |
| BET specific surface area of composite active material (m$^2$/g) | 6.5 | 7.7 | - | 9.8 | 32.4 | - | 21.3 | 38.2 | - |
| Initial charge capacity (mAh/g) | 1024 | 1082 | - | 848 | 1151 | 1275 | 1348 | 1271 | 1112 |
| Initial charge expansion ratio (%) | 139 | 126 | - | 118 | 116 | 116 | 122 | 121 | 222 |
| Charge-discharge efficiency at 20th cycle (%) | 99.2 | 99.4 | - | 99.4 | 99.1 | 98.8 | 98.7 | 98.7 | 98.4 |

**Reference Signs List**

1 matrix
1a precursor of amorphous carbon
2 Si-based material
3 void
3a polymer film
11 first particle
12 second particle
13 aggregate of second particles
100 composite active material for lithium secondary battery
200 electrode

**Claims**

1. A composite active material for a lithium secondary battery, comprising:

   a matrix having a plurality of voids; and
   a Si-based material accommodated in the voids,
   wherein the matrix includes amorphous carbon, and
   the Si-based material is Si or a Si alloy.

2. The composite active material for a lithium secondary battery according to claim 1, wherein a ratio of a volume of the voids to a volume of the Si-based material is 0.5 to 50.

3. The composite active material for a lithium secondary battery according to claim 1 or 2, wherein the voids included in the matrix have an average size of 50 to 1000 nm.

4. The composite active material for a lithium secondary battery according to any one of claims 1 to 3, wherein a standard deviation of a sectional area distribution of the voids included in the matrix is 30 $\mu m^2$ or less.

5. The composite active material for a lithium secondary battery according to any one of claims 1 to 4, wherein an average number of the Si-based material accommodated in each of the voids included in the matrix is 4 or less.

6. The composite active material for a lithium secondary battery according to any one of claims 1 to 5, wherein a standard deviation of a sectional area distribution of the Si-based material included in the matrix is 30 $\mu m^2$ or less.

7. The composite active material for a lithium secondary battery according to any one of claims 1 to 6, wherein a shortest distance between the Si-based material and an inner wall surface of each of the voids accommodating the Si-based material is 10 nm or less.

8. The composite active material for a lithium secondary battery according to any one of claims 1 to 7, wherein a shortest distance between each of the plurality of voids and voids arranged around a corresponding one of the plurality of voids is 1.0 $\mu m$ or less.

9. The composite active material for a lithium secondary battery according to any one of claims 1 to 8, further comprising:

   an outer layer outside the matrix,
   wherein the outer layer includes crystalline carbon or an amorphous carbon having a pore size of 10 nm or more.

10. The composite active material for a lithium secondary battery according to claim 9, wherein the crystalline carbon satisfies at least one of conditions (1) to (3) below:

    (1) a purity determined from semiquantitative values of impurities of 26 elements (Al, Ca, Cr, Fe, K, Mg, Mn, Na, Ni, V, Zn, Zr, Ag, As, Ba, Be, Cd, Co, Cu, Mo, Pb, Sb, Se, Th, Tl, and U) by ICP emission spectroscopy is 99 wt% or more,
(2) a S content measured by ion chromatography (IC) using an oxygen flask combustion method is 1 wt% or less, and
(3) a BET specific surface area is 100 m$^2$/g or less.

11. The composite active material for a lithium secondary battery according to any one of claims 1 to 10, wherein the composite active material has a particle size (D50) of 0.3 to 50 μm.

12. The composite active material for a lithium secondary battery according to any one of claims 1 to 11, wherein the composite active material has a BET specific surface area of 100 m$^2$/g or less.

13. A method for manufacturing the composite active material for a lithium secondary battery according to claim 1, the method comprising:

a first step of coating the Si-based material with a polymer film to obtain first particles;
a second step of mixing or coating the first particles with a precursor of amorphous carbon to obtain second particles; and
a third step of aggregating and firing the second particles to form a fired body.

14. The method for manufacturing a composite active material for a lithium secondary battery according to claim 13, wherein the polymer film is formed using a monomer, an initiator, and a dispersant.

15. The method for manufacturing a composite active material for a lithium secondary battery according to claim 13 or 14, the method further comprising a fourth step of coating the fired body with carbon.

16. The method for manufacturing a composite active material for a lithium secondary battery according to any one of claims 13 to 15, wherein the precursor of amorphous carbon is polyacrylonitrile.

17. An electrode composition for a lithium secondary battery, comprising the composite active material for a lithium secondary battery according to any one of claims 1 to 12.

18. A lithium secondary battery electrode comprising the composite active material for a lithium secondary battery according to any one of claims 1 to 12.

Fig.1

# Fig.2

# Fig.3

# Fig.4

13

12

Fig.5

## Fig.6

## INTERNATIONAL SEARCH REPORT

International application No.

PCT/JP2021/012059

| A. CLASSIFICATION OF SUBJECT MATTER |
|---|
| H01M 4/36(2006.01)i; H01M 4/38(2006.01)i; H01M 4/587(2010.01)i; C01B 32/05(2017.01)i<br>FI: H01M4/38 Z; H01M4/587; H01M4/36 E; H01M4/36 C; C01B32/05<br>According to International Patent Classification (IPC) or to both national classification and IPC |

| B. FIELDS SEARCHED |
|---|
| Minimum documentation searched (classification system followed by classification symbols)<br>H01M4/36; H01M4/38; H01M4/587; C01B32/05 |
| Documentation searched other than minimum documentation to the extent that such documents are included in the fields searched<br>    Published examined utility model applications of Japan        1922–1996<br>    Published unexamined utility model applications of Japan   1971–2021<br>    Registered utility model specifications of Japan          1996–2021<br>    Published registered utility model applications of Japan   1994–2021 |
| Electronic data base consulted during the international search (name of data base and, where practicable, search terms used) |

| C. DOCUMENTS CONSIDERED TO BE RELEVANT |
|---|

| Category* | Citation of document, with indication, where appropriate, of the relevant passages | Relevant to claim No. |
|---|---|---|
| X<br>Y | JP 2019-511444 A (WACKER CHEMIE AG) 25 April 2019 (2019-04-25) claims 1-10, paragraphs [0011]-[0014], [0027]-[0037], [0039], [0061]-[0064], [0067]-[0081], [0083]-[0084], [0097]-[0110], [0114]-[0117], [0119], fig. 1-4 | 1-18<br>9-10, 15 |
| X<br><br>Y | JP 2006-228640 A (NIPPON CARBON CO., LTD.) 31 August 2006 (2006-08-31) claims 1-6, paragraphs [0010], [0013]-[0016], [0020]-[0025] | 1-8, 11-13, 17-18<br>9-10, 15 |
| X<br><br>Y | JP 2018-163776 A (PANASONIC IP MANAGEMENT CO., LTD.) 18 October 2018 (2018-10-18) claims 1-4, paragraphs [0014]-[0016], [0027]-[0028], [0056]-[0066] | 1-8, 11-12, 17-18<br>9-10 |

☒   Further documents are listed in the continuation of Box C.    ☒   See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>   27 May 2021 (27.05.2021) | Date of mailing of the international search report<br>   15 June 2021 (15.06.2021) |
|---|---|
| Name and mailing address of the ISA/<br>   Japan Patent Office<br>   3-4-3, Kasumigaseki, Chiyoda-ku,<br>   Tokyo 100-8915, Japan | Authorized officer<br><br><br>Telephone No. |

Form PCT/ISA/210 (second sheet) (January 2015)

INTERNATIONAL SEARCH REPORT

International application No.

PCT/JP2021/012059

C (Continuation).　DOCUMENTS CONSIDERED TO BE RELEVANT

| Category* | Citation of document, with indication, where appropriate, of the relevant passages | Relevant to claim No. |
|---|---|---|
| A | JP 2020-506152 A (WACKER CHEMIE AG) 27 February 2020 (2020-02-27) | 1-18 |
| A | JP 2015-176867 A (BELENOS CLEAN POWER HOLDING AG) 05 October 2015 (2015-10-05) | 1-18 |
| A | US 2015/0099187 A1 (BOARD OF TRUSTEES OF THE LELAND STANFORD JUNIOR UNIVERSITY) 09 April 2015 (2015-04-09) | 1-18 |
| A | CN 104319401 A (SHANGHAI JIAO TONG UNIVERSITY) 28 January 2015 (2015-01-28) | 1-18 |

Form PCT/ISA/210 (continuation of second sheet) (January 2015)

INTERNATIONAL SEARCH REPORT

Information on patent family members

International application No.

PCT/JP2021/012059

| Patent Documents referred in the Report | Publication Date | Patent Family | Publication Date |
|---|---|---|---|
| JP 2019-511444 A | 25 Apr. 2019 | US 2020/0194778 A1 claims 1-11, paragraphs [0015]-[0023], [0037]-[0047], [0049], [0071]-[0074], [0077]-[0090], [0092]-[0093], [0107]-[0110], [0125]-[0133], [0142], fig. 1-4 WO 2017/140645 A1 EP 3417499 A1 KR 10-2018-0101552 A CN 108701809 A | |
| JP 2006-228640 A | 31 Aug. 2006 | (Family: none) | |
| JP 2018-163776 A | 18 Oct. 2018 | (Family: none) | |
| JP 2020-506152 A | 27 Feb. 2020 | US 2020/0044241 A1 WO 2018/145733 A1 KR 10-2019-0090025 A CN 110178251 A | |
| JP 2015-176867 A | 05 Oct. 2015 | US 2015/0263340 A1 EP 2919298 A1 CN 104916865 A KR 10-2015-0106843 A | |
| US 2015/0099187 A1 | 09 Apr. 2015 | WO 2015/051309 A1 | |
| CN 104319401 A | 28 Jan. 2015 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6449154 B

**Non-patent literature cited in the description**

- **KONG LIJUAN et al.** *Electrochimica Acta,* 2016, vol. 198, 144-155